# EUROPEAN PATENT APPLICATION

(11) **EP 4 845 136 A1**
(43) Date of publication of application: **25.11.2026**
(21) Application number: 25747714.1
(22) Date of filing: 22.01.2025
(51) Int. Cl.: H04M 1/72484

(54) **DISPLAY METHOD, USER INTERFACE, AND RELATED APPARATUS**

(30) Priority: 31.01.2024 CN 202410148123
(71) Applicant: Huawei Technologies Co., Ltd., Shenzhen, Guangdong 518129 (CN)
(72) Inventor: RAO, Meng, Shenzhen, Guangdong 518129 (CN)
(74) Representative: Huawei European IPR
(86) International application number: PCT/CN2025/074073
(87) International publication number: WO 2025/162144

(57) **Abstract**

This application discloses a display method, a user interface, and a related apparatus. An electronic device may receive a first notification message of a first application, and display a first card on a home screen, where the first notification message is displayed on the first card. The electronic device may further receive a second notification message of the first application, where the first notification message and the second notification message belong to different categories. The electronic device may display the second notification message in a notification bar. In this way, the electronic device can filter notification messages of an application based on message categories, to prevent all notification messages from being displayed in the notification bar, thereby improving efficiency of viewing messages by a user.

## Description

This application claims priority to Chinese Patent Application No. 202410148123.3, filed with the China National Intellectual Property Administration on January 31, 2024 and entitled "DISPLAY METHOD, USER INTERFACE, AND RELATED APPARATUS", which is incorporated herein by reference in its entirety.

### TECHNICAL FIELD

This application relates to the field of terminals, and in particular, to a display method, a user interface, and a related apparatus.

### BACKGROUND

With continuous development of the field of terminals, a quantity of applications installed on an electronic device is gradually increasing, and a quantity of notification messages pushed by the applications is also increasing. These notification messages are all displayed in a notification bar. A user needs to spend a large amount of time and energy to view the notification messages in the notification bar, and cannot quickly find, from a large quantity of notification messages, a notification message that the user wants to view.

### SUMMARY

This application provides a display method, a user interface, and a related apparatus, so that some notification messages pushed by an application are displayed on a home screen card, making it convenient for a user to view the notification messages.

According to a first aspect, an embodiment of this application provides a display method. The method includes: An electronic device receives a first notification message of a first application; the electronic device displays a first card on a home screen, where the first notification message is displayed on the first card; the electronic device receives a second notification message of the first application, where the first notification message and the second notification message belong to different categories; and the electronic device displays the second notification message in a notification bar.

The electronic device displays the first card on the home screen, and may not display the first notification message in the notification bar. In addition, the electronic device displays the second notification message in the notification bar, and may not display the first notification message on the home screen.

By implementing the method provided in the first aspect, the electronic device can push different categories of notification messages of a same application in different manners. When notification messages of the same application are pushed, some notification messages are presented on the home screen in a form of home screen cards, and some notification messages can be displayed in the notification bar. This prevents all messages pushed by the application from being displayed in the notification bar, which avoids being not conducive to browsing and managing notification messages by the user, thereby improving efficiency of browsing notification messages by the user, and making it convenient for the user to quickly view, through a card, a notification message that the user wants to view.

With reference to the first aspect, in an implementation, the first application is an instant messaging application, and the first notification message and the second notification message are notification messages sent by different contacts in the instant messaging application; or the first application is an e-commerce application, and the first notification message and the second notification message are notification messages from different stores in the e-commerce application; or the first application is a multimedia application, and the first notification message and the second notification message are notification messages from different multimedia publishers.

With reference to the first aspect, in an implementation, the first notification message belongs to a first type of notification messages for which a card notification function is enabled in the first application, and before the electronic device receives the first notification message of the first application, the method further includes: The electronic device displays a first page of the first application, where the first page is used to present the first type of notification messages in the first application; and the electronic device detects a first operation performed on the first page, and enables the card notification function for the first type of notification messages.

In other words, in a process of viewing, in an application, a notification message pushed by the application, the user can authorize a card notification function for this type of notification messages of the application. In this way, the user can determine, at any time according to a requirement of the user, whether to move a type of notification messages pushed by the application to home screen cards for pushing, thereby meeting a personalized management requirement of the user for notification messages.

With reference to the first aspect, in an implementation, the first notification message belongs to a first type of notification messages for which a card notification function is enabled in the first application, and before the electronic device receives the first notification message of the first application, the method further includes: The electronic device receives a third notification message of the first application, where the third notification message belongs to the first type of notification messages; the electronic device displays the third notification message; and the electronic device detects a second operation performed on the third notification message, and enables the card notification function for the first type of notification messages.

In other words, when the electronic device pushes a notification message of an application, a card notification function is authorized for this type of notification messages of the application. In this way, the user can determine, at any time according to a requirement of the user, whether to move a type of notification messages pushed by the application to home screen cards for pushing, thereby meeting a personalized management requirement of the user for notification messages.

With reference to the first aspect, in an implementation, the method further includes: The electronic device receives a fourth notification message; and the electronic device displays a second card in a superimposed manner based on the first card, where the fourth notification message is displayed on the second card.

In other words, the electronic device can display a plurality of cards in a superimposed manner on the home screen. This can prevent the plurality of cards on the home screen from occupying an excessive area, thereby improving home screen utilization.

With reference to the first aspect, in an implementation, when the fourth notification message and the first notification message are messages pushed by a same application, the second card is located in a first direction of the first card; and when the fourth notification message and the first notification message are messages pushed by different applications, the second card is located in a second direction of the first card; and the first direction is a horizontal direction or a vertical direction, and the first direction is perpendicular to the second direction.

In other words, the electronic device can use different stacking manners to distinguish between cards corresponding to notification messages of different applications and between cards corresponding to notification messages of a same application, so that the user can quickly distinguish, from a plurality of cards, between notification messages of different applications and between different notification messages in an application, thereby making it convenient for the user to manage and browse notification messages in the cards.

With reference to the first aspect, in an implementation, the method further includes: The electronic device detects a third operation performed on the second card; and the electronic device adjusts a superimposition order of the first card and the second card.

In other words, the electronic device can adjust an order of cards in a card stack based on a user operation, so that the user can view, in a manner of adjusting the order of cards, notification messages presented on the cards in the card stack.

With reference to the first aspect, in an implementation, when the second card is located in the first direction of the first card, the third operation includes a swipe operation in the first direction, and the first direction is the horizontal direction or the vertical direction.

With reference to the first aspect, in an implementation, the first card is displayed in a first card stack in a superimposed manner, and the first card stack corresponds to a first card group. The method further includes: The electronic device receives a fifth notification message; and the electronic device displays a third card in a superimposed manner on a second card stack displayed on the home screen, where the fifth notification message is displayed on the third card, and the second card stack corresponds to a second card group.

In other words, the electronic device can set different card groups for different notification messages, so that when displaying cards corresponding to notification messages, the electronic device can categorize and display different cards based on card groups, making it convenient for the user to manage and browse different notification messages.

With reference to the first aspect, in an implementation, the first card is displayed in the first card stack, and a plurality of cards are displayed in a superimposed manner in the first card stack. The method further includes: The electronic device detects a fourth operation performed on the first card, and sets a first reminder time for the first card; and the electronic device pins the first card to the top in the first card stack when the first reminder time elapses.

In other words, the electronic device can set a to-do item for a card in a card stack based on a user operation, so that the card can be pinned to the top after a reminder time set by the user elapses, so that the user can promptly view the card that needs to be processed, thereby enhancing the user's management for cards.

With reference to the first aspect, in an implementation, the method further includes: The electronic device detects a fifth operation performed on the first card, and the electronic device displays a first window in a floating manner, where an application page corresponding to the first notification message is displayed in the first window.

In other words, in addition to viewing a notification message through a home screen card, the user can also open an application page corresponding to the notification message through the card, so that the user can view details of the notification message and process the notification message.

With reference to the first aspect, in an implementation, the electronic device stores an identifier of a notification message category for which a card notification function is enabled in one or more applications. Before the electronic device displays the first card on the home screen, the method further includes: The electronic device determines that the stored identifier includes an identifier of a notification message category to which the first notification message belongs.

Correspondingly, after enabling a card notification function of a specific notification message category, the electronic device can store an identifier of the notification message category, so that when receiving a notification message of the same notification message category again, the electronic device can display the notification message on a home screen card.

With reference to the first aspect, in an implementation, the electronic device displays the first card stack and the second card stack on the home screen, the first card stack and the second card stack include one or more cards, and the first card is located in the first card stack; and the method further includes: The electronic device detects an operation of dragging the first card toward the second card stack, and moves the first card to the second card stack.

In other words, the electronic device can adjust cards in different card stacks based on a user operation, thereby increasing a degree of operational freedom of the user.

With reference to the first aspect, in an implementation, the method further includes: The electronic device enables a card notification function of a second application through a settings application; the electronic device receives a sixth notification message of the second application, where the sixth notification message is any notification message pushed by the second application; and the electronic device displays a fourth card on the home screen when the card notification function of the second application is enabled, where the sixth notification message is displayed on the fourth card.

The electronic device displays the fourth card on the home screen, and may not display the sixth notification message in the notification bar.

In other words, the electronic device can set a card notification function of an application through the settings application, and the user can select, based on a willingness of the user, whether to enable a card notification function of an application. If the electronic device obtains a notification message pushed by an application for which a card notification function is enabled, the notification message is presented on a home screen card. If the electronic device obtains a notification message pushed by an application for which a card notification function is not enabled, the notification message is not presented on a home screen card, for example, the notification message is presented in the notification bar.

With reference to the first aspect, in an implementation, the electronic device displays the notification bar when detecting a swipe-down operation from a top of a display screen.

According to a second aspect, an embodiment of this application provides an electronic device, including a memory, one or more processors, and one or more programs. When the one or more processors execute the one or more programs, the electronic device is enabled to implement the method described in the first aspect or in any implementation of the first aspect.

According to a third aspect, an embodiment of this application provides a computer-readable storage medium including instructions. When the instructions are run on an electronic device, the electronic device is enabled to perform the method described in the first aspect or in any implementation of the first aspect.

According to a fourth aspect, an embodiment of this application provides a computer program product. When the computer program product is run on a computer, the computer is enabled to perform the method described in the first aspect or in any implementation of the first aspect.

### BRIEF DESCRIPTION OF DRAWINGS

FIG. 1A to FIG. 1E are related user interfaces of an electronic device 100 enabling a card notification function for an application according to an embodiment of this application;
FIG. 2A(a) to FIG. 2B(b) are related user interfaces of an electronic device 100 authorizing a card notification function for a notification message of an application according to an embodiment of this application;
FIG. 3A to FIG. 3C are related user interfaces of an electronic device 100 presenting a notification message on a card according to an embodiment of this application;
FIG. 4A to FIG. 4C are related user interfaces of an electronic device 100 opening an application page through a card according to an embodiment of this application;
FIG. 5A to FIG. 5C are related user interfaces of an electronic device 100 adjusting a card order according to an embodiment of this application;
FIG. 6A and FIG. 6B are related user interfaces of an electronic device 100 deleting a card from a card stack according to an embodiment of this application;
FIG. 7A to FIG. 7C are related user interfaces of an electronic device 100 setting a to-do item for a card according to an embodiment of this application;
FIG. 8A and FIG. 8B are related user interfaces of an electronic device 100 adjusting card stacks in different groups according to an embodiment of this application;
FIG. 9A to FIG. 9C are related user interfaces of an electronic device 100 presenting a card stack according to an embodiment of this application;
FIG. 10 is a schematic flowchart of a display method according to an embodiment of this application;
FIG. 11 is a schematic flowchart of another display method according to an embodiment of this application;
FIG. 12 is a schematic flowchart of a display method according to an embodiment of this application;
FIG. 13 is a diagram of a hardware structure of an electronic device 100 according to an embodiment of this application; and
FIG. 14 is a block diagram of a software structure of an electronic device 100 according to an embodiment of this application.

### DESCRIPTION OF EMBODIMENTS

The following provides a clear and detailed description for the technical solutions in embodiments of this application with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be interpreted as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application program or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is generally represented in a form of a graphic user interface (graphic user interface, GUI), which is a user interface displayed in a graphic manner and related to computer operations. The user interface may be a visual interface element such as a text, an icon, a button, a menu, a tab, a text box, a dialog box, a status bar, a navigation bar, or a Widget that is displayed on a display screen of the electronic device.

An embodiment of this application provides a display method. In the display method, after a notification message from an application is obtained, it is determined whether the notification message belongs to a message category authorized by a user. If the notification message belongs to the message category authorized by the user, the notification message is displayed on a service card on a home screen, or if the notification message does not belong to the message category authorized by the user, the notification message may be displayed in a notification bar.

The electronic device 100 can detect a swipe-down operation of the user from a top of a display screen, and open the notification bar. The notification bar can be used to display one or more notification messages pushed by an application and one or more function setting options, for example, a Wi-Fi setting item, a mobile network setting item, a Bluetooth setting item, and an airplane mode setting item.

The service card is a form of interface presentation that pre-places important information or operations from an application page on a card, so as to achieve purposes of direct service access and reducing hierarchy. The user can implement some functions in an application through the service card without opening the application, and view some content provided in the application.

In summary, by implementing the display method provided in this embodiment of this application, the user can filter notification messages of an application, preventing all notification messages from being displayed in the notification bar, and allowing a notification message specified by the user to be displayed on the service card. The user needs to view, on the service card, only some notification messages specified by the user, making it convenient for the user to view a notification message that the user is interested in.

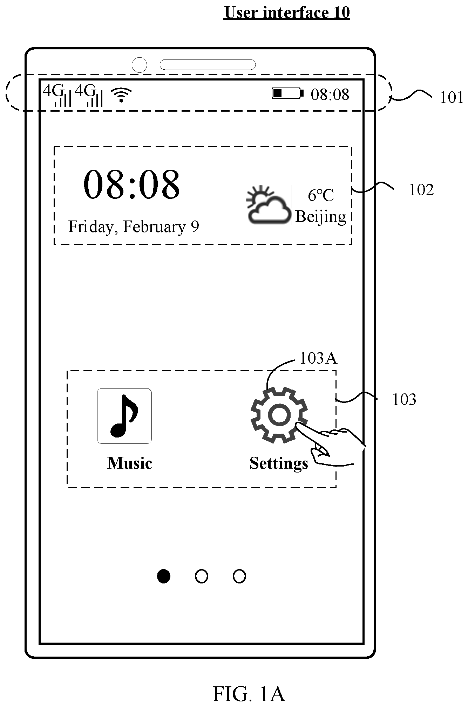

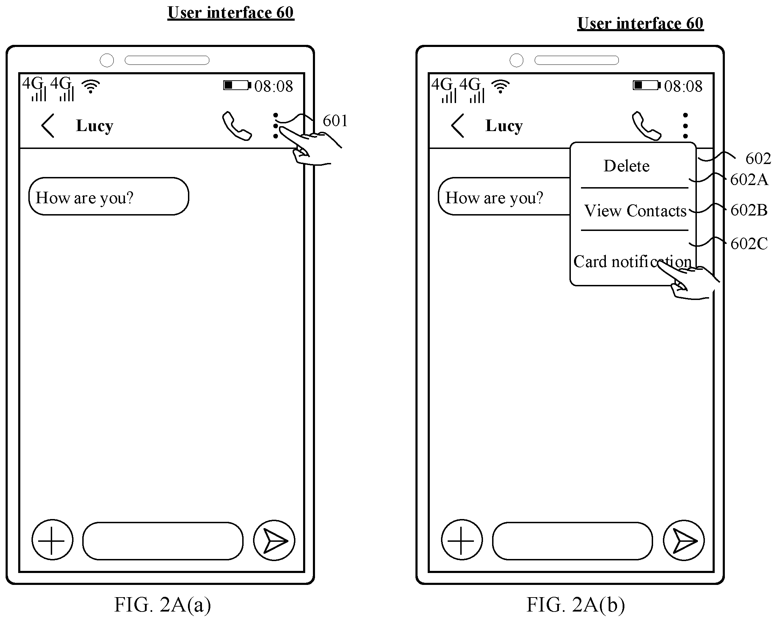

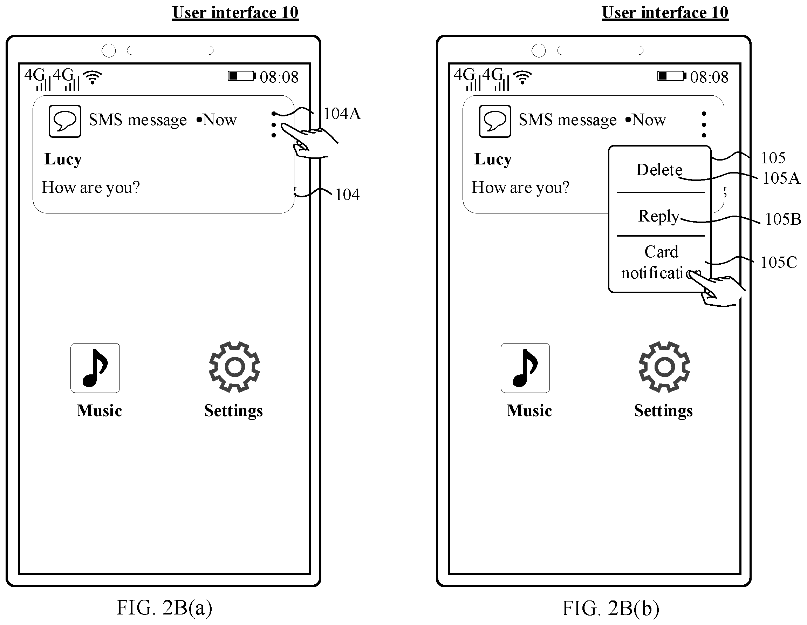

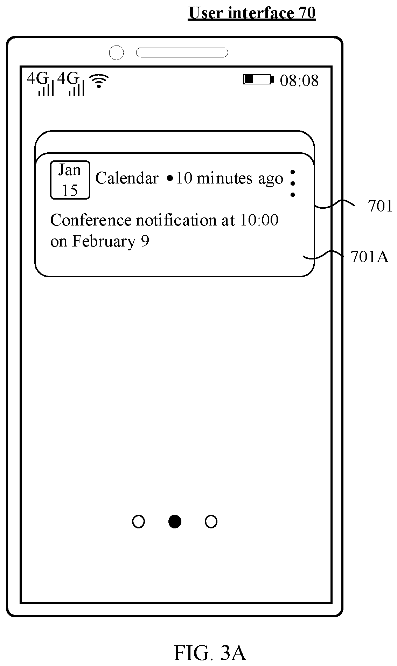

The following describes some user interfaces provided in embodiments of this application by using FIG. 1A to FIG. 1E, FIG. 2A(a) to FIG. 2B(b), FIG. 3A to FIG. 3C, FIG. 4A to FIG. 4C, FIG. 5A to FIG. 5C, FIG. 6A and FIG. 6B, FIG. 7A to FIG. 7C, FIG. 8A and FIG. 8B, and FIG. 9A to FIG. 9C.

**FIG. 1A to FIG. 1E** **are related user interfaces of an electronic device 100 enabling a card notification function for an application according to an embodiment of this application.**

FIG. 1A shows an example user interface 10 for an application menu on the electronic device 100.

As shown in FIG. 1A, the user interface 10 may include a status bar 101, a calendar and weather indicator 102, and one or more application icons 103.

The status bar 101 may include one or more signal strength indicators of a mobile communication signal, one or more signal strength indicators of a wireless fidelity (wireless fidelity, Wi-Fi) signal, a battery status indicator, and a time indicator. The calendar and weather indicator 102 may indicate a current time and weather type. The one or more application icons 103 can be used to present one or more application icons. For example, as shown in FIG. 1A, the one or more application icons 103 may include a settings icon 103A. The settings icon 103A may be an icon of a settings application, and the settings icon 103A can be used to open the settings application. The settings application can be used to provide the user with one or more functions for managing and setting an application, for example, functions such as managing a system account and setting an airplane mode, Wi-Fi, Bluetooth, a personal hotspot, a mobile network, notification management, and display and brightness. In embodiments of this application, the settings application is further used to set a card notification function of an application. The card notification function can be used to present a notification message of the application on a home screen card.

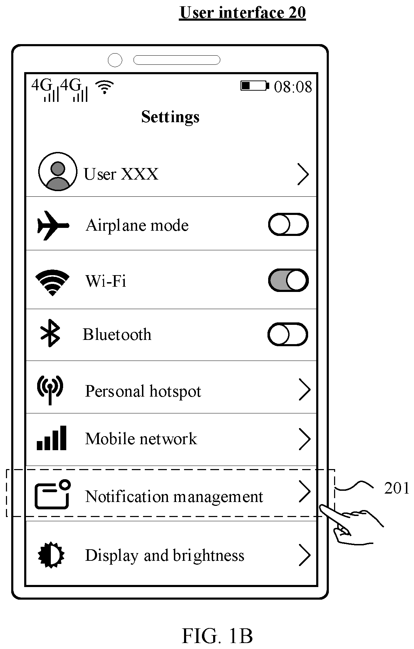

As shown in FIG. 1A, the electronic device 100 can detect a user operation performed on the settings icon 103A, for example, a tap operation. In response to the operation, the electronic device 100 can open the settings application, and display a user interface 20 shown in FIG. 1B. The user interface 20 can be used to present one or more options corresponding to one or more functions included in the settings application.

It may be understood that the electronic device 100 may alternatively open the settings application in another manner. For example, when detecting a voice instruction of the user for opening the settings application, the electronic device 100 triggers opening of the settings application. A manner of opening the settings application is not limited in this embodiment of this application.

As shown in FIG. 1B, the user interface 20 may include a notification management option 201. The notification management option 201 is an option corresponding to a notification management function, and the notification management function can be used to set notification of notification messages of an application.

It may be understood that a name of the notification management function is not limited in this embodiment of this application. In another embodiment of this application, the notification management function may also be referred to as a notification message management function, a notification and status bar function, or the like.

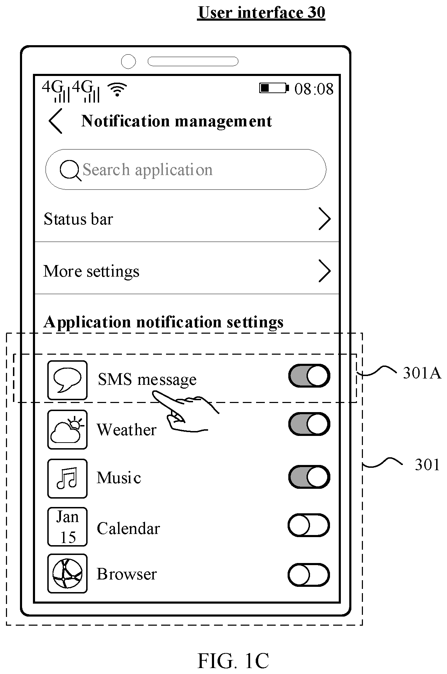

As shown in FIG. 1B, the electronic device 100 can detect a user operation performed on the notification management option 201, for example, a tap operation. In response to the operation, the electronic device 100 can display a user interface 30 shown in FIG. 1C. The user interface 30 can be used to present a page corresponding to the notification management function.

As shown in FIG. 1C, the user interface 30 may include an application presentation bar 301. The application presentation bar 301 can be used to present one or more options corresponding to one or more applications installed on the electronic device 100. The user can set notification of notification messages of the one or more applications through the one or more options.

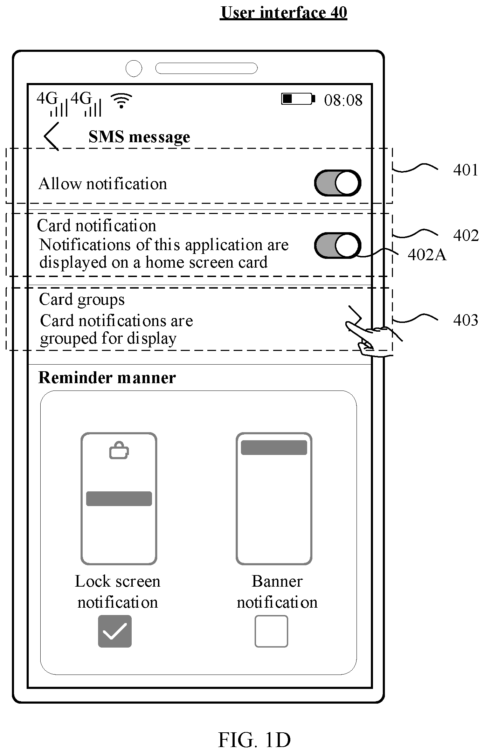

As shown in FIG. 1C, the application presentation bar 301 may include an SMS option 301A, and the SMS option 301A is an option corresponding to an SMS application. The electronic device 100 can detect a user operation performed on the SMS option 301A, for example, a tap operation. In response to the operation, the electronic device 100 can display a user interface 40 shown in FIG. 1D. The user interface 40 can be used to present one or more function sub-options provided for the SMS application in the notification management function.

As shown in FIG. 1D, the user interface 40 may include an allow notification option 401, a card notification option 402, and a card grouping option 403.

The allow notification option 401 can be used to enable or disable notification of notification messages of an application. If the electronic device 100 enables the notification of notification messages of the application, the electronic device 100 can push notification messages of the application, and the user can view, in the notification bar or on the home screen, the notification messages pushed by the application. If the electronic device 100 disables the notification of notification messages of the application, the electronic device 100 does not push notification messages of the application, and the user does not see, in the notification bar or on the home screen, the notification messages pushed by the application.

The card notification option 402 can be used to enable or disable a card notification function of an application. If the electronic device 100 enables the card notification function of the application, the electronic device 100 can present, on a home screen card, a notification message pushed by the application, and the user can view, on the home screen card, the notification message pushed by the application. If the electronic device 100 disables the card notification function of the application, the electronic device 100 does not present, on a home screen card, a notification message pushed by the application, and the user does not see, on the home screen card, the notification message pushed by the application. For example, the electronic device 100 can display, in the notification bar, the notification message pushed by the application.

For example, the card notification option 402 may include a switch 402A. The switch 402A can detect a user operation, for example, a tap operation, to enable or disable a card notification function of an application.

The card grouping option 403 can be used to set, when a card notification function of an application is enabled, a card group in which the application is located. Specifically, a plurality of card groups may be presented on the home screen of the electronic device 100. The electronic device 100 can set card groups of an application, so that when a notification message of the application needs to be notified, the notification message is presented in a card group set by the electronic device 100.

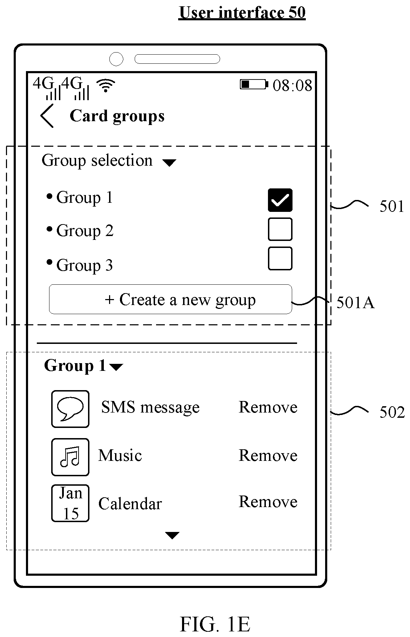

As shown in FIG. 1D, the electronic device 100 can detect a user operation performed on the card grouping option 403, for example, a tap operation. In response to the operation, the electronic device 100 can display a user interface 50 shown in FIG. 1E. The user interface 50 can be used to present one or more card groups.

As shown in FIG. 1E, the user interface 50 may include: a grouping setting bar 501 and a grouping presentation bar 502.

The grouping setting bar 501 can be used to set a card group in which an application is located. For example, as shown in FIG. 1E, the electronic device 100 is provided with three card groups: a group 1, a group 2, and a group 3. The electronic device 100 can detect selection operations performed by the user on options corresponding to different groups, and classify applications into selected card groups. In addition, the grouping setting bar 501 may further include a new group creation option 501A, and the new group creation option 501A can be used to create a new card group.

The grouping presentation bar 502 can be used to display an application included in a card group. For example, as shown in FIG. 1E, the group 1 may include applications such as an SMS application, a music application, and a calendar application. Further, optionally, the electronic device 100 can detect an operation performed by the user on an option of an application included in a card group, and remove the application from the card group.

It may be understood that FIG. 1A to FIG. 1E show, by taking an SMS application as an example, related user interfaces of the electronic device 100 setting a card notification function for the SMS application. The SMS application is only an example application in this embodiment of this application. The electronic device 100 can set a card notification function for any application installed on the electronic device 100. The application is not limited in this embodiment of this application.

It can be learned from FIG. 1A to FIG. 1E that the electronic device 100 can set a card notification function of an application through the settings application, and the user can select, based on willingness of the user, whether to enable the card notification function of the application. If the electronic device 100 obtains a notification message pushed by an application for which a card notification function is enabled, the notification message is presented on a home screen card. If the electronic device 100 obtains a notification message pushed by an application for which a card notification function is not enabled, the notification message is not presented on a home screen card, for example, the notification message is presented in the notification bar.

In some implementations, after the electronic device 100 obtains a notification message of an application, and before the notification message is displayed in the notification bar or on a home screen card, the electronic device 100 can perform banner notification on the notification message, that is, display the notification message on a top of a current user interface in a floating manner, and the notification message can automatically disappear after a short stay. If the user does not process the notification message in a floating display process of the notification message, the electronic device 100 then displays the notification message in the notification bar or on a home screen card.

Further, the electronic device 100 can display, on the top of the current user interface in the floating manner, only a notification message pushed by an application for which a card notification function is not enabled. If the notification message obtained by the electronic device 100 is a notification message pushed by an application for which a card notification function is enabled, the notification message does not need to be displayed on the top of the current user interface in the floating manner, and the notification message is directly presented on a home screen card. This can prevent the electronic device 100 from presenting each obtained notification message on the top of the user interface, which avoids obscuring content that the user is viewing and affecting an item that the user is processing, thereby reducing a quantity of times that notification messages pushed by applications affect the user.

In addition to setting a card notification function for an application in the manners shown in FIG. 1A to FIG. 1E to enable the electronic device 100 to present all notification messages pushed by the application on cards, the electronic device 100 can further authorize the card notification function only for some notification messages of the application, so that when obtaining a notification message for which card notification is authorized of the application, the electronic device 100 can present the notification message on a card, while when obtaining a notification message for which card notification is not authorized of the application, the electronic device does not present the notification message on a card, for example, still presents in the notification bar.

This can not only prevent all notification messages pushed by an application from being presented in the notification bar, but also filter the notification messages of the application when the electronic device 100 obtains the notification messages of the application, so that the user can view, on cards, some notification messages specified by the user for the application, thereby improving efficiency of browsing the notification messages by the user, and making it convenient for the user to quickly view, through cards, the notification messages specified by the user.

**FIG. 2A(a) to FIG. 2B(b)** **show different manners in which an electronic device 100 authorizes a card notification function for a notification message of an application.**

It should be understood that FIG. 2A(a) to FIG. 2B(b) take an SMS application as an example to describe related user interfaces of the electronic device 100 authorizing a card notification function for a notification message of an application. The SMS application does not constitute a limitation on this embodiment of this application. The electronic device 100 may further authorize a card notification function for a notification message of another application in the manners shown in FIG. 2A(a) to FIG. 2B(b).

FIG. 2A(a) and FIG. 2A(b) show a user interface involved when the electronic device 100 authorizes, on an application page, a card notification function for a notification message of an application.

FIG. 2A(a) shows a user interface 60 in an SMS application, and the user interface 60 can be used to present a chat page between the user and a contact "Lucy".

As shown in FIG. 2A(a), the user interface 60 may include more options 601. The more options 601 can be used to provide one or more functional options for the chat page between the user and the contact "Lucy".

For example, if the electronic device 100 detects a user operation performed on the more options 601, for example, a tap operation, and in response to the operation, the electronic device 100 can add and display, to and in the user interface 60, an option bar 602 shown in FIG. 2A(b).

As shown in FIG. 2A(b), the option bar 602 may include a delete option 602A, a view contact option 602B, and a card notification option 602C.

The delete option 602A can be used to delete a conversation with the contact "Lucy".

The view contact option 602B can be used to present detailed information of the contact "Lucy", for example, a contact number and a call history.

The card notification option 602C can be used to enable a card notification function of a notification message sent by the contact "Lucy", that is, authorize the card notification function for the notification message sent by the contact "Lucy". If the card notification function is authorized for the notification message sent by the contact "Lucy", after obtaining the notification message sent by the contact "Lucy", the electronic device 100 can present the notification message on a card instead of presenting the notification message in the notification bar.

FIG. 2B(a) shows a user interface 10 presented after the electronic device 100 receives a notification message sent by the contact "Lucy" in the SMS application.

As shown in FIG. 2B(a), the user interface 10 may include a notification message presentation window 104. The notification message presentation window 104 can be used to present a notification message (hereinafter referred to as a notification message 1) sent by the contact "Lucy" in the SMS application.

For example, the notification message presentation window 104 may be displayed on a top of the user interface 10 in a floating manner, and if the electronic device 100 does not detect a user operation performed by the user on the notification message presentation window 104, the notification message presentation window 104 can disappear after a short stay.

The notification message presentation window 104 may include more options 104A. The more options 104A can be used to provide one or more functional options for the notification message 1.

For example, if the electronic device 100 detects a user operation performed on the more options 104A, for example, a tap operation, and in response to the operation, the electronic device 100 can add and display, to and in the user interface 10, an option bar 105 shown in FIG. 2B(b).

As shown in FIG. 2B(b), the option bar 105 may include a delete option 105A, a reply option 105B, and a card notification option 105C.

The delete option 105A can be used to delete the notification message 1. After the electronic device 100 deletes the notification message 1, the electronic device 100 does not display the notification message 1 in the notification bar.

The reply option 105B can be used to open a chat window between the user and the contact "Lucy", so that the user replies to the notification message 1.

The card notification option 105C can be used to enable a card notification function of a notification message sent by the contact "Lucy", that is, authorize the card notification function for the notification message sent by the contact "Lucy". If the card notification function is authorized for the notification message sent by the contact "Lucy", after obtaining the notification message sent by the contact "Lucy", the electronic device 100 can present the notification message on a card instead of presenting the notification message in the notification bar.

In addition, for notification messages sent by other contacts in the SMS application, if the user does not authorize card notification, when obtaining the notification messages sent by other contacts, the electronic device 100 still displays the notification messages in the notification bar instead of presenting the notification messages on cards.

It can be learned from FIG. 2A(a) to FIG. 2B(b) that, in a process of viewing, in an application, a notification message pushed by the application, the user can authorize a card notification function for this type of notification messages of the application, or when the electronic device 100 pushes a notification message of the application, the user can authorize a card notification function for this type of notification messages of the application. In this way, the user can determine, at any time according to a requirement of the user, whether to move a type of notification messages pushed by the application to cards for pushing, thereby meeting a personalized management and control requirement of the user for notification messages.

Optionally, in addition to authorizing, by the electronic device 100, a card notification function for a type of notification messages in an application in the manners shown in FIG. 2A(a) to FIG. 2B(b), the electronic device 100 can further provide an option for the user to set a card group for this type of notification messages, so that the user sets a card group in which the notification messages are located. In this way, in a process in which the electronic device 100 displays an application page or displays a notification message pushed by an application, a card group of the notification message pushed by the application can be set.

In some implementations, after the electronic device 100 enables a card notification function for a type of notification messages in an application, the electronic device 100 can further disable the card notification function for this type of notification messages based on a user operation. For example, the electronic device 100 can display, on an application page (for example, in the user interface 10 shown in FIG. 2A(b)), an option used to disable the card notification function. The electronic device 100 can detect a user operation performed on the option, and disable the card notification function for a type of notification messages displayed on the application page. Alternatively, when a notification message is pushed, the electronic device 100 can display, on a window corresponding to the notification message (for example, in the user interface 10 shown in FIG. 2B(b)), an option used to disable the card notification function. The electronic device 100 can detect a user operation performed on the option, and disable the card notification function for this type of notification messages displayed in the window. Alternatively, the electronic device 100 can further manage card notification functions for different categories of notification messages in an application through the settings application. This is not limited in this embodiment of this application.

**FIG. 3A to FIG. 3C** **show related user interfaces of an electronic device 100 presenting a notification message on a card.**

FIG. 3A shows a user interface 70 of the electronic device 100 presenting a service card corresponding to a notification message on a home screen.

As shown in FIG. 3A, the user interface 70 may include a card stack 701. The card stack 701 may be used to present a notification message pushed by one or more applications. The notification message pushed by the one or more applications may be one or more. The card stack 701 may include one or more cards. When the card stack 701 includes a plurality of cards, the plurality of cards may be stacked up and down in a specific order. The order may be a chronological order in which the electronic device 100 obtains notification messages, or may be an order in which notification messages are arranged based on importance. This is not limited in this embodiment of this application.

For example, as shown in FIG. 3A, the card stack 701 may include two cards stacked up and down, and one card is used to present one notification message.

In some implementations, the card stack 701 may present only a notification message on one of the cards, and content on another card may be obscured by the card located above the another card due to impact of up and down obscuring between the cards. In this way, the user can focus on only content of one of the notification messages through the card stack.

In some implementations, in addition to presenting a notification message on one of the cards, the card stack 701 can further present some content on other cards, for example, application information corresponding to the notification message, including an application icon, an application name, and the like. In this way, the user can not only view, through the card stack, all content of a notification message presented on one of the cards, but also know some content of notification messages presented on other cards, so that when switching a stacked order of the cards in the card stack, the user can perform targeted switching on the cards in the card stack through some information presented on other cards.

It may be understood that in the card stack shown in FIG. 3A, the plurality of cards may be stacked up and down in a vertical arrangement direction. In another embodiment of this application, the plurality of cards in the card stack may alternatively be stacked up and down in a horizontal arrangement direction. A stacked direction of the cards is not limited in this embodiment of this application.

As shown in FIG. 3A, the card stack 701 may include a card 701A. The card 701A can be used to present a notification message pushed by a calendar application. The notification message may present notification message content "a conference notification at 10:00 on February 9" and a push time of the notification message.

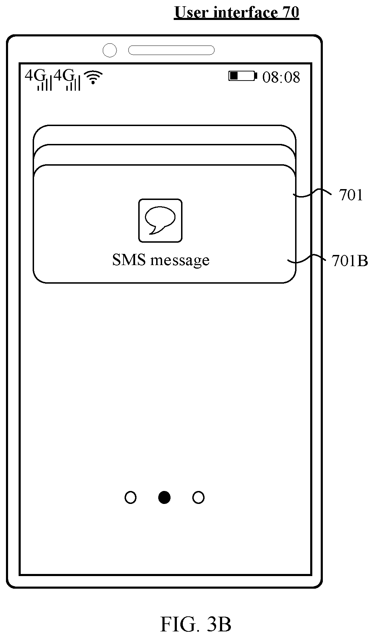

Following FIG. 3A, if the electronic device 100 enables a card notification function for an SMS application based on FIG. 1A to FIG. 1E, or enables a card notification function for a specified notification message of an SMS application based on FIG. 2A(a) and FIG. 2A(b) or FIG. 2B(a) and FIG. 2B(b), the electronic device 100 can add and display a blank card 701B shown in FIG. 3B to and on a card stack on the home screen, for example, the card stack 701 shown in FIG. 3A. The blank card 701B can be used to present, after the electronic device 100 obtains a notification message or a specified notification message of the SMS application, the notification message on the blank card 701B.

As shown in FIG. 3B, the blank card 701B can be displayed at an uppermost layer of the card stack 701. For example, the blank card 701B can display an application icon of the SMS application. Content presented on the blank card 701B is not limited in this embodiment of this application.

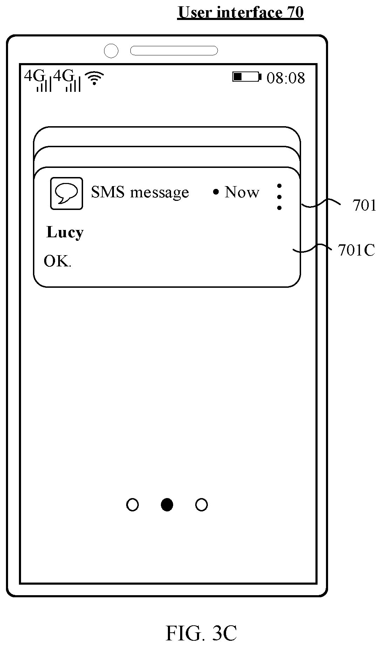

If the electronic device 100 obtains a notification message of the SMS application or a specified notification message for which the user authorizes a card notification function, the electronic device 100 can update the blank card 701B to a card 701C shown in FIG. 3C.

As shown in FIG. 3C, the card 701C can be used to display a notification message "OK" sent by the contact "Lucy" in the SMS application.

It should be noted that, if the electronic device 100 enables the card notification function for the SMS application based on FIG. 1A to FIG. 1E, the card 701C can be used to present any notification message that is of the SMS application and that is obtained by the electronic device 100. If the electronic device 100 enables the card notification function for a specified notification message of the SMS application based on FIG. 2A(a) and FIG. 2A(b) or FIG. 2B(a) and FIG. 2B(b), the card 701C is used to present only the specific notification message for the SMS application obtained by the electronic device 100. For example, if the electronic device 100 enables, based on FIG. 2A(a) and FIG. 2A(b) or FIG. 2B(a) and FIG. 2B(b), the card notification function for notification messages of the contact "Lucy" in the SMS application, the card 701C is used to present only notification messages sent by the contact "Lucy".

It may be understood that, after the electronic device 100 displays the user interface 70 shown in FIG. 3A, if the electronic device 100 enables the card notification function of the SMS application or enables the card notification function for a specified notification message of the SMS application, the electronic device 100 may not need to add and display the blank card 701B shown in FIG. 3B to and on the card stack 701. Instead, after obtaining the notification message or the specified notification message of the SMS application, the electronic device 100 adds and displays the card 701C shown in FIG. 3C to and on the card stack 701 shown in FIG. 3A.

In some implementations, the electronic device 100 can further detect a user operation performed by the user on a card stack, and adjust a position of the card stack on the home screen. For example, in FIG. 3C, the electronic device 100 can detect a drag-down operation performed by the user on the card stack 701, and move the card stack 701 downward.

It can be learned from FIG. 3A to FIG. 3C that, after a card notification function is enabled for an application or a card notification function is enabled for a specified notification message of an application, a blank card corresponding to the application or the specified notification message can be first added and displayed to and on the home screen; and when a notification message of the application or the specified notification message needs to be notified, the notification message is displayed on the blank card. Alternatively, after a card notification function is enabled for an application or a card notification function is enabled for a specified notification message of an application, when a notification message of the application or the specified notification message needs to be notified, a card can be then added to the home screen, and the notification message is displayed on the card.

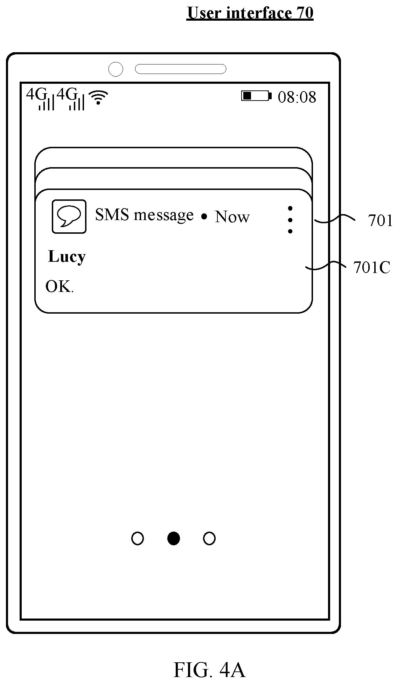

**FIG. 4A to FIG. 4C** **show related user interfaces of an electronic device 100 opening an application page through a card.**

FIG. 4A shows a user interface 70 of the electronic device 100 presenting a service card corresponding to a notification message on a home screen.

As shown in FIG. 4A, the user interface 70 may include a card stack 701, and the card stack 701 may be formed by stacking three cards. A card 701C located at an uppermost layer of the card stack 701 is a notification message sent by a contact "Lucy" pushed by an SMS application.

In an example, the electronic device 100 can detect a user operation performed on the card 701C, for example, a tap operation, and in response to the operation, the electronic device 100 can display, in a floating manner, an application page corresponding to a notification message presented on the card 701C.

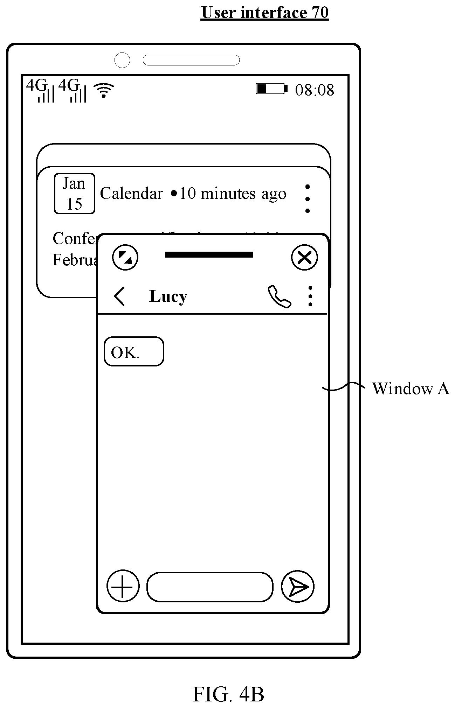

With reference to FIG. 4A and FIG. 4B, when the electronic device 100 detects the tap operation performed on the card 701C shown in FIG. 4A, in response to the operation, the electronic device 100 can display, in a floating manner in the user interface 70, a window A shown in FIG. 4B. The window A can be used to present a chat page between the user and the contact "Lucy" in the SMS application.

In an example, the electronic device 100 can detect a user operation performed on the card 701C, for example, a double-tap operation, and in response to the operation, the electronic device 100 can display, in a full-screen manner, an application page corresponding to a notification message presented on the card 701C.

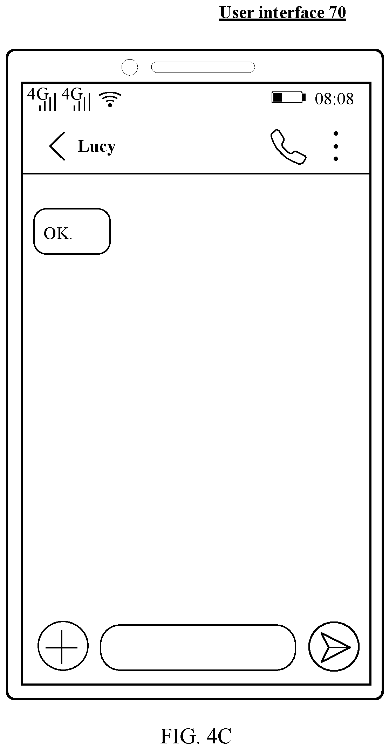

With reference to FIG. 4A and FIG. 4C, when the electronic device 100 detects the double-tap operation performed on the card 701C shown in FIG. 4A, in response to the operation, the electronic device 100 can display a user interface 70 shown in FIG. 4C. The user interface 70 can be used to present a chat page between the user and the contact "Lucy" in the SMS application.

It can be learned from FIG. 4A to FIG. 4C that, in addition to viewing a notification message through a home screen card, the user can also open an application page corresponding to the notification message through the card, so that the user can view details of the notification message and process the notification message.

It may be understood that, after the user views an application page corresponding to a notification message, the notification message has been viewed by the user. Therefore, after the electronic device 100 opens the application page corresponding to the notification message, a card corresponding to the notification message can be deleted from the home screen, to prevent the card corresponding to the notification message from affecting browsing of a notification message on another card by the user.

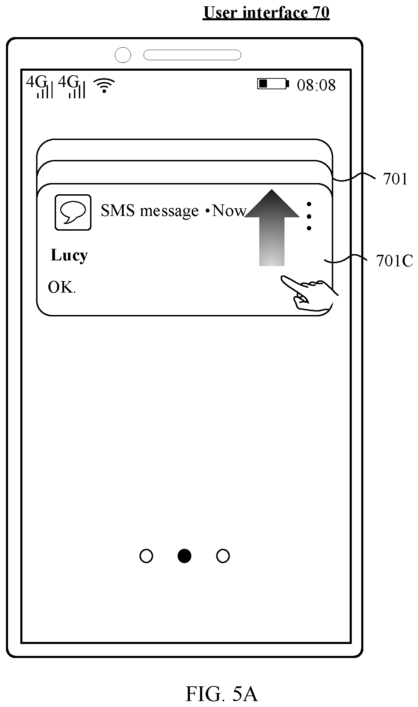

**FIG. 5A to FIG. 5C** **show related user interfaces of an electronic device 100 adjusting a card order.**

FIG. 5A shows a user interface 70 of the electronic device 100 presenting a service card corresponding to a notification message on a home screen.

As shown in FIG. 5A, the user interface 70 may include a card stack 701. The card stack 701 may be formed by stacking three cards. A card 701C located at an uppermost layer of the card stack 701 is a notification message sent by a contact "Lucy" pushed by an SMS application.

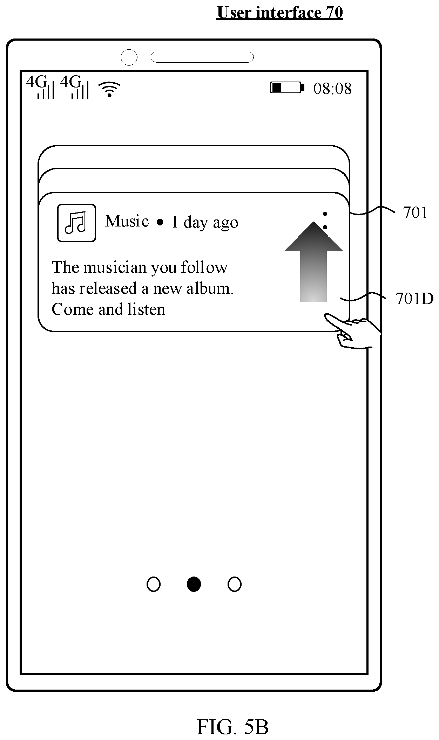

As shown in FIG. 5A, the electronic device 100 can detect a user operation performed on the card 701C, for example, a swipe-up operation. In response to the operation, the electronic device 100 can adjust an order of cards included in the card stack 701. For example, the electronic device 100 moves a card stacked at a lower layer of the card 701C to the uppermost layer, and moves the card 701C to a bottommost layer of the card stack 701. For a card stack 701 after order adjustment, refer to FIG. 5B.

As shown in FIG. 5B, a card stacked at the uppermost layer in the card stack 701 is a card 701D, and a notification message pushed by a music application is presented on the card 701D. Content of the notification message may include: "The musician you follow has released a new album. Come and listen!"

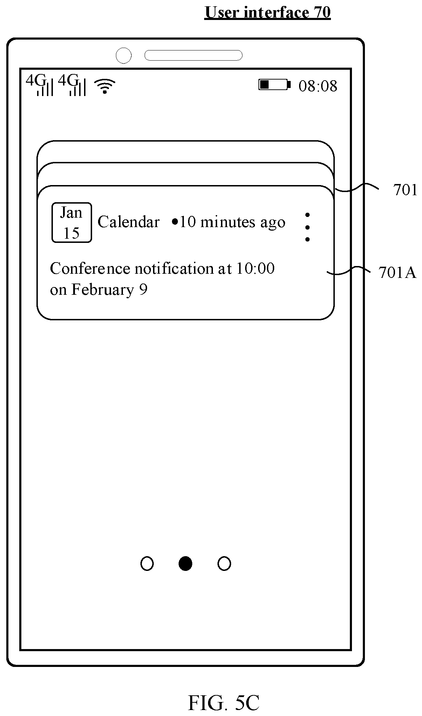

Further, as shown in FIG. 5B, the electronic device 100 can detect a user operation performed on the card 701D, for example, a swipe-up operation. In response to the operation, the electronic device 100 can continue to adjust an order of cards included in the card stack 701. For example, the electronic device 100 moves a card stacked at a lower layer of the card 701D to the uppermost layer, and moves the card 701D to a bottommost layer of the card stack 701. For a card stack 701 after order adjustment, refer to FIG. 5C.

As shown in FIG. 5C, a card stacked at the uppermost layer in the card stack 701 is a card 701A. A notification message pushed by a calendar application is presented on the card 701A, and content of the notification message may include "a conference notification at 10:00 on February 9".

It may be understood that, in addition to detecting an operation of swiping a card stack upward by the user to move positions of cards upward, the electronic device 100 can further detect an operation of swiping a card stack downward by the user to move positions of cards downward. In addition, if the cards in the card stack are stacked in a horizontal arrangement direction, the operation of adjusting the card order may be a swipe operation in a left-right direction. A form of the user operation for adjusting the card order is not limited in this embodiment of this application.

It can be learned from FIG. 5A to FIG. 5C that the electronic device 100 can adjust an order of cards in a card stack based on a user operation, so that the user can view, in a manner of adjusting the order of cards, notification messages presented on the cards in the card stack.

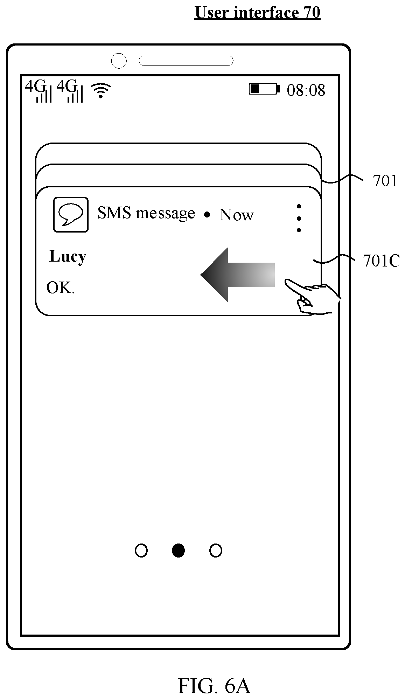

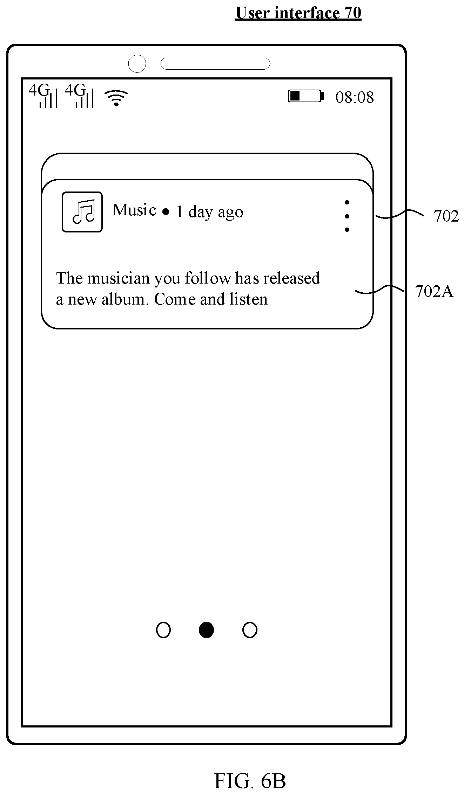

**FIG. 6A** **and** **FIG. 6B** **show related user interfaces of an electronic device 100 deleting a card from a card stack.**

FIG. 6A shows a user interface 70 of the electronic device 100 presenting a service card corresponding to a notification message on a home screen.

As shown in FIG. 6A, the user interface 70 may include a card stack 701, and the card stack 701 may be formed by stacking three cards. A card 701C located at an uppermost layer of the card stack 701 is a notification message sent by a contact "Lucy" pushed by an SMS application.

As shown in FIG. 6A, the electronic device 100 can detect a user operation performed on the card 701C, for example, a swipe-left operation. In response to the operation, the electronic device 100 can delete the card 701C, and the card stack 701 is changed to a card stack 702 shown in FIG. 6B.

As shown in FIG. 6B, the card stack 702 has one less card than the card stack 701 shown in FIG. 6A, that is, the card 701C shown in FIG. 6A. In addition, a card 702A displayed at the uppermost layer in the card stack 702 is a card located at a lower layer of the card 701C in the card stack 701 shown in FIG. 6A. A notification message pushed by a music application is presented on the card 702A. Content of the notification message may include: "The musician you follow has released a new album. Come and listen!"

It may be understood that the electronic device 100 can further continue to detect a user operation performed on the card 702A shown in FIG. 6B, for example, a swipe-left operation, to delete the card 702A.

It should be noted that, in addition to the swipe-left operation, the electronic device 100 can alternatively delete a card in a card stack by detecting a swipe-right operation performed on the card in the card stack. In addition, if the cards in the card stack are stacked in a horizontal arrangement direction, the operation of deleting the card may be a swipe operation in an up-down direction. A form of the operation is not limited in this embodiment of this application.

It can be learned from FIG. 6A and FIG. 6B that the electronic device 100 can delete a card from a card stack based on a user operation. In this way, the user can clear up a quantity of cards included in the card stack by himself, thereby improving efficiency of browsing notification messages by the user.

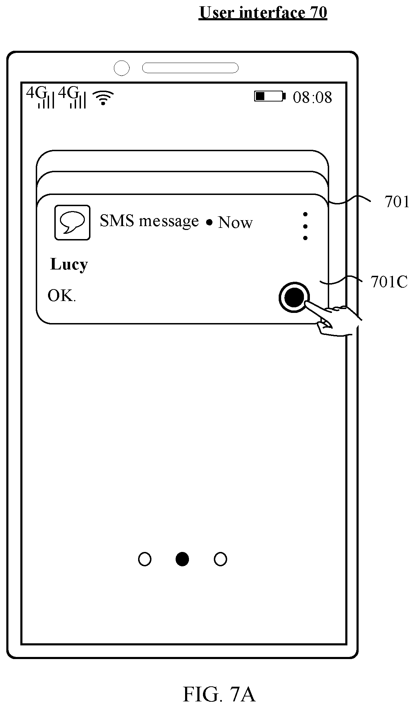

**FIG. 7A to FIG. 7C** **show related user interfaces of an electronic device 100 setting a to-do item for a card.**

FIG. 7A shows a user interface 70 of the electronic device 100 presenting a service card corresponding to a notification message on a home screen.

As shown in FIG. 7A, the user interface 70 may include a card stack 701, and the card stack 701 may be formed by stacking three cards. A card 701C located at an uppermost layer of the card stack 701 is a notification message sent by a contact "Lucy" pushed by an SMS application.

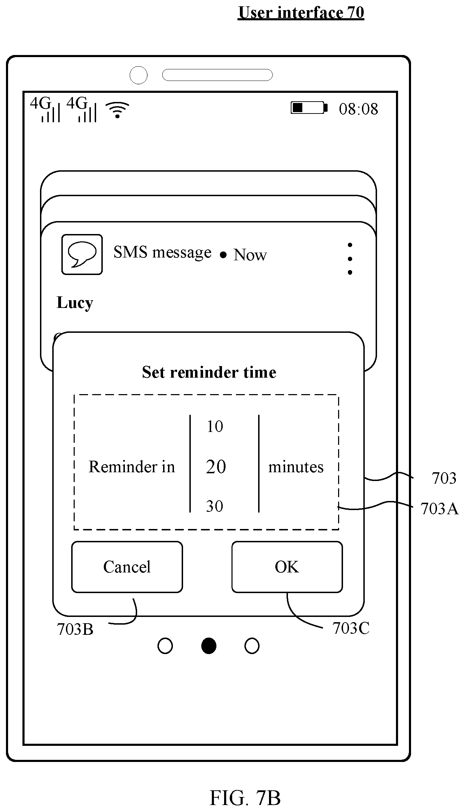

As shown in FIG. 7A, the electronic device 100 can detect a user operation performed on the card 701C, for example, a touch-and-hold operation. In response to the operation, the electronic device 100 can add and display, to and in the user interface 70, a window 703 shown in FIG. 7B. The window 703 can be used to set a to-do item for the card 701C.

As shown in FIG. 7B, the window 703 may include a time setting option 703A, a cancel option 703B, and an OK option 703C. The time setting option 703A can be used to set a reminder time for a to-do item, the cancel option 703B can be used to cancel setting of the to-do item, and the OK option 703C can be used to confirm setting of the to-do item. The electronic device 100 can pin the card 701C to the top in the card stack 701 after a time interval that the user sets for the to-do item.

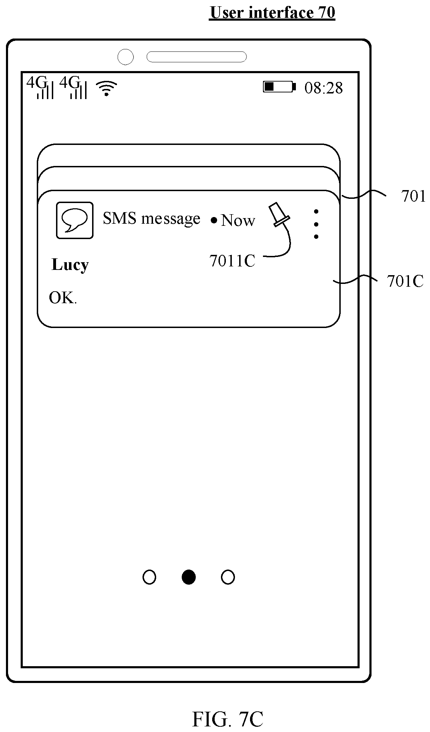

For example, if the user sets the reminder time for the to-do item to 20 minutes based on FIG. 7B, the electronic device 100 can start timing after detecting performed on the OK option 703C. After 20 minutes elapses, the card 701C is pinned to the top in the card stack 701. In other words, the card stack 701 shown in FIG. 7C is displayed, the card 701C is located at the uppermost layer of the card stack 701, and if a card is subsequently added to the card stack 701, the added card is still stacked below the card 701C, and the card 701C is always located at the uppermost layer of the card stack 701.

As shown in FIG. 7C, the card 701C further includes a pin identifier 7011C. The pin identifier 7011C indicates that the current card 701C is pinned to the top in the card stack 701.

Optionally, after 20 minutes elapses, if the electronic device 100 does not display the user interface 70, the electronic device 100 can output prompt information to prompt the user to promptly switch to the user interface 70, and view and process the card 701C. A manner of outputting the prompt information may include but is not limited to: displaying prompt information, vibration, voice prompt, and the like.

It may be understood that, before the reminder time set by the user elapses, the card for which the to-do item is set is still affected by an operation of adjusting a card order by the user or an added card in the card stack, and an order of the card in the card stack is changed. The electronic device 100 does not pin the card to the top for which the to-do item is set until the reminder time elapses.

It can be learned from FIG. 7A to FIG. 7C that the electronic device 100 can set a to-do item for a card in a card stack based on a user operation, so that the card can be pinned to the top after a reminder time set by the user elapses, so that the user can promptly view the card that needs to be processed, thereby enhancing the user's management for cards.

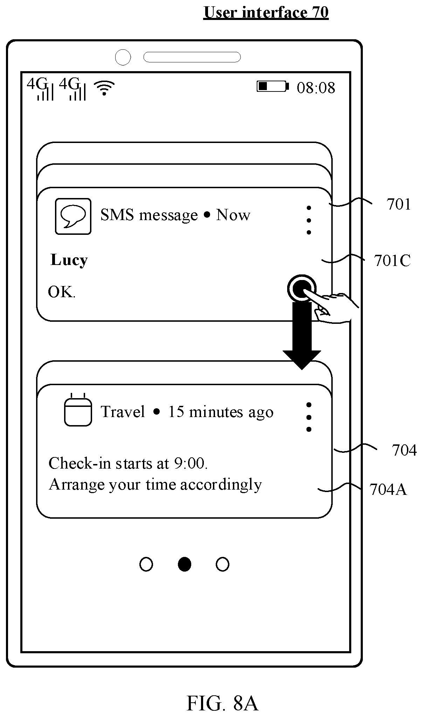

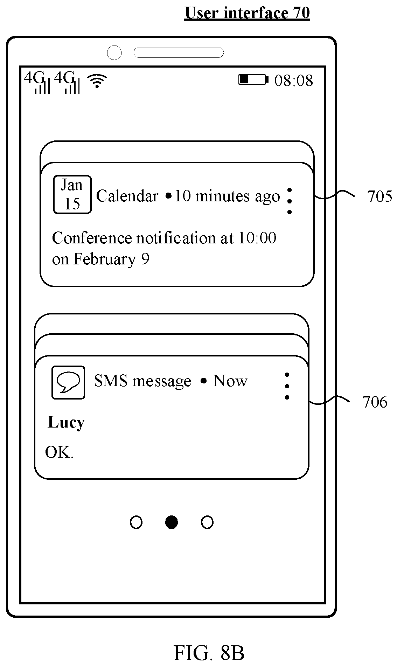

**FIG. 8A** **and** **FIG. 8B** **show related user interfaces of an electronic device 100 adjusting card stacks in different groups.**

FIG. 8A shows a user interface 70 of the electronic device 100 presenting a plurality of card stacks on a home screen. One card stack corresponds to one card group, and cards in a same card group can be stacked to form one card stack.

As shown in FIG. 8A, the user interface 70 may include a card stack 701 and a card stack 704. The card stack 701 is formed by stacking three cards, and the card stack 704 is formed by stacking two cards. A card 701C located at an uppermost layer of the card stack 701 is a notification message sent by a contact "Lucy" pushed by an SMS application. A card 704A located at an uppermost layer of the card stack 704 is a notification message pushed by a travel application, and content of the notification message may include: "Check-in starts at 9:00. Arrange your time accordingly!"

Cards included in different card stacks can be determined by card groups that are set when the user enables a card notification function for an application or a card notification function for a specified notification message of an application.

Further, the electronic device 100 can further modify, based on a user operation, card groups in which different cards are located. Specifically, with reference to FIG. 8A, the electronic device 100 can detect a drag operation performed on the card 701C, for example, a drag operation toward the card stack 704, move the card 701C to the card stack 704, and display the user interface 70 shown in FIG. 8B.

As shown in FIG. 8B, the user interface 70 may include a card stack 705 and a card stack 706. The card stack 705 is a card stack obtained after the card 701C is deleted from the card stack 701 shown in FIG. 8A, and the card stack 706 is a card stack obtained after the card 701C is added to the card stack 704 shown in FIG. 8A. For example, the card stack 704 can be displayed at an uppermost layer of the card stack 706.

It may be understood that the electronic device 100 can further continue to detect a drag operation performed by the user on a card in a card stack, to implement grouping adjustment of cards.

In addition, in some implementations, the electronic device 100 may further detect an operation of dragging a card toward a blank region on the home screen by the user, delete the card from an original card group, and re-group the card into a new card group in the blank region.

It can be learned from FIG. 8A and FIG. 8B that the electronic device 100 can set different groups for notification messages in a form of card stacks, and the electronic device 100 can further adjust, based on a user operation, notification messages presented in different groups, so that the user manages different notification messages in a form of groups.

Because a plurality of applications are generally installed on the electronic device 100, and one application generally pushes a plurality of notification messages, one card stack can be used to present a plurality of notification messages pushed by a plurality of applications. To help the user quickly distinguish, from a plurality of cards included in a card stack, between notification messages of different applications and between different notification messages in an application, when placing, in one card stack, cards corresponding to notification messages of different applications and cards corresponding to notification messages of a same application, the electronic device 100 can use different stacking manners, thereby making it convenient for the user to manage and browse notification messages in the cards.

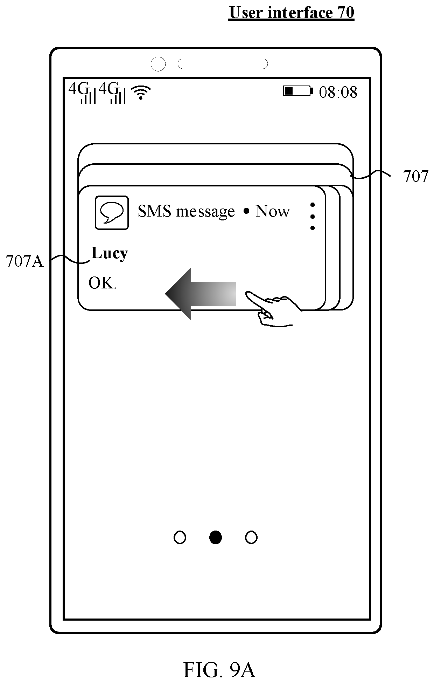

**FIG. 9A to FIG. 9C** **show related user interfaces of an electronic device 100 presenting a card stack.**

FIG. 9A shows a user interface 70 of the electronic device 100 presenting a service card corresponding to a notification message on a home screen.

As shown in FIG. 9A, the user interface 70 may include a card stack 707, and the card stack 707 may be formed by stacking five cards. Three cards are stacked in a horizontal arrangement direction. The three horizontally stacked cards are all used to present notification messages pushed by a same application, for example, an SMS application. The three cards are then stacked in a vertical arrangement direction with the other two cards. The vertically stacked cards are used to present notification messages pushed by different applications.

A card 707A located at an uppermost layer of the card stack 707 is used to present a notification message sent by a contact "Lucy" pushed by the SMS application.

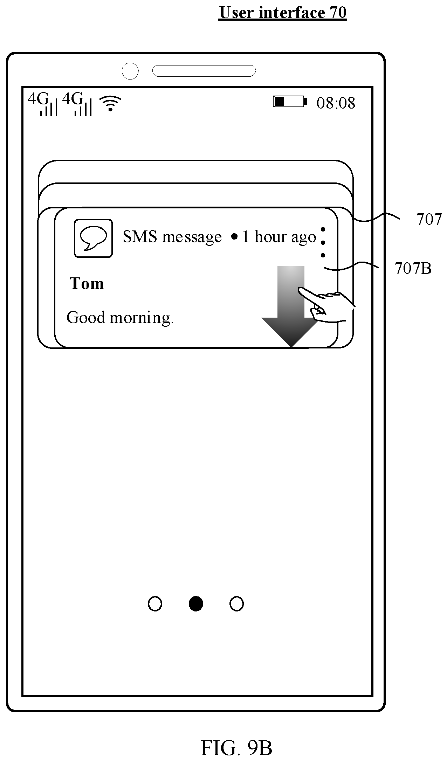

As shown in FIG. 9A, the electronic device 100 can detect a user operation performed on the card 707A, for example, a swipe-left operation. In response to the operation, a hierarchical relationship of the card 707A in the three cards stacked in a left-right direction is changed, that is, the card stack 707 shown in FIG. 9B is displayed.

As shown in FIG. 9B, compared with FIG. 9A, a card 707B located on a right side of the card 707A is moved to the uppermost layer of the card stack 707. The card 707B is used to present a notification message sent by a contact "Tom" pushed by the SMS application, and content of the notification message is "Good morning."

It may be understood that, in addition to changing a hierarchical relationship of horizontally stacked cards in a swipe-left manner, the hierarchical relationship of the horizontally stacked cards may be changed in a swipe-right manner.

In other words, in the card stack, notification messages pushed by a same application can be horizontally stacked together, and the user can switch, in a swipe-left or swipe-right manner, to view different notification messages pushed by the same application.

In some implementations, the electronic device 100 can further detect a user operation performed on the card stack 707, and delete one or more cards from the card stack 707. For example, the electronic device 100 can detect a delete operation performed on the card 707B shown in FIG. 9B, and delete the card 707B, or delete a card that is included in the card stack 707 and that belongs to a same application as the card 707B, that is, delete a card horizontally stacked together with the card 707B from the card stack 707. For example, the delete operation may be a touch-and-hold operation, a swipe operation performed on a specified position of a card, a tap operation performed on a delete icon in a card, or the like. The delete operation is not limited in this embodiment of this application.

In some other implementations, in a process in which the electronic device 100 switches a card order, if the electronic device 100 completely presents all content of a card included in the card stack 707, it indicates that the user has finished reading the card. Therefore, the electronic device 100 can automatically delete the card.

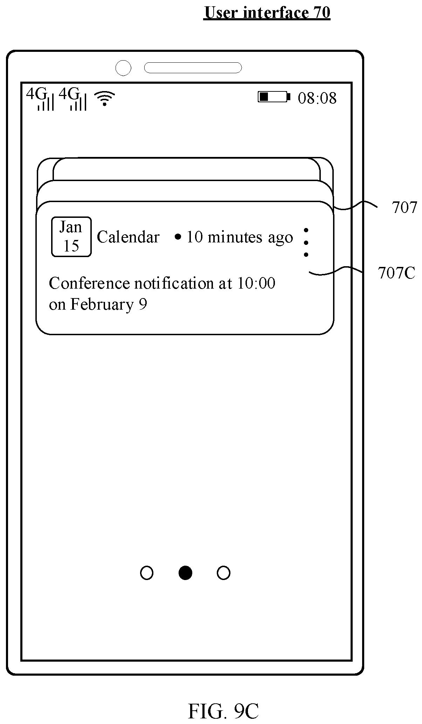

As shown in FIG. 9B, the electronic device 100 can detect a user operation performed on the card 707B, for example, a swipe-up operation. In response to the operation, a hierarchical relationship between cards stacked up and down in the card stack 707 is changed, that is, the card stack 707 shown in FIG. 9C is displayed.

As shown in FIG. 9C, compared with FIG. 9B, a card 707C located above the card 707B is moved to the uppermost layer of the card stack 707, and the card 707B and all cards stacked on left and right sides of the card 707B are moved to a lowermost layer of the card stack 707. The card 707C is used to present a notification message pushed by a calendar application, and content of the notification message includes "a conference notification at 10:00 on February 9".

It may be understood that, in addition to changing a hierarchical relationship between vertically stacked cards in a swipe-up manner, the hierarchical relationship between the vertically stacked cards may be changed in a swipe-down manner.

In other words, in a card stack, notification messages pushed by different applications can be stacked in the vertical arrangement direction, and the user can switch, in a swipe-up or swipe-down manner, to view the notification messages pushed by the different applications.

It may be understood that FIG. 9A and FIG. 9B merely describe examples of possible stacking manners of notification messages of different applications and possible stacking manners of different notification messages of a same application. In another embodiment of this application, different notification messages of a same application may be vertically stacked, and notification messages of different applications may be horizontally stacked. This is not limited in this embodiment of this application.

It can be learned from FIG. 9A to FIG. 9C that the electronic device 100 can place, in different stacking manners, cards corresponding to notification messages of a same application and different applications in a more orderly manner, so that the user can quickly find content that the user wants to browse when viewing notification messages through a card stack.

It may be understood that user interfaces shown in FIG. 1A to FIG. 1E, FIG. 2A(a) to FIG. 2B(b), FIG. 3A to FIG. 3C, FIG. 4A to FIG. 4C, FIG. 5A to FIG. 5C, FIG. 6A and FIG. 6B, FIG. 7A to FIG. 7C, FIG. 8A and FIG. 8B, and FIG. 9A to FIG. 9C and content of notification messages of applications mentioned in the user interfaces are merely examples, and do not constitute a limitation on embodiments of this application.

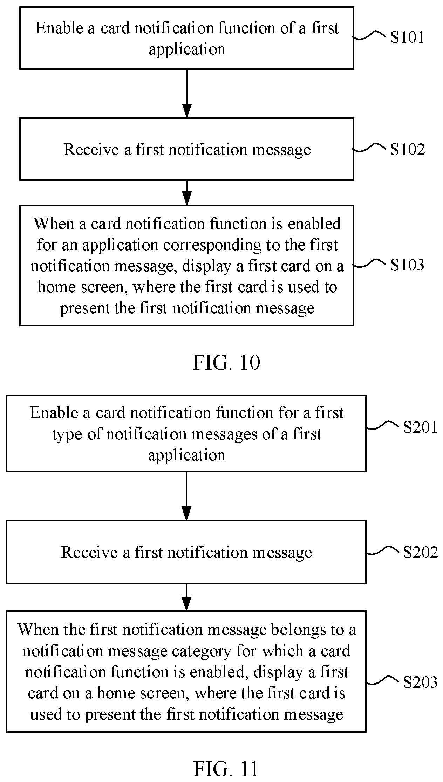

**FIG. 10** **is a schematic flowchart of a display method according to an embodiment of this application.**

As shown in FIG. 10, the display method may include the following steps.

**S101:** An electronic device 100 enables a card notification function of a first application.

The first application may be any application installed on the electronic device 100. The first application is not limited in this embodiment of this application.

The card notification function can present a notification message pushed by an application to a user in a form of a card. In this way, the user does not need to view the notification message pushed by the application in a notification bar, and can directly browse the notification message pushed by the application on a service card on a home screen.

The electronic device 100 can enable a card notification function of an application based on a user operation. In other words, the electronic device 100 can determine, based on a willingness of the user, whether to enable the card notification function of the application.

For example, the electronic device 100 can manage a card notification function of each application through a settings application. For example, the card notification function of the application is enabled or disabled through the settings application, or card groups of the application are set through the settings application.

For a specific process in which the electronic device 100 enables the card notification function of the application through the settings application and sets card groups of the application through the settings application, refer to related descriptions in FIG. 1A to FIG. 1E.

**S102:** The electronic device 100 receives a first notification message.

The first notification message may be a notification message pushed by an application server of an application or the application in the electronic device 100 to the electronic device 100. The application server of the application can send the notification message of the application to the electronic device 100, to push the notification message.

For example, if the application is an e-commerce application, the first notification message of the application may include related information about a shopping commodity. If the application is an instant messaging application, the first notification message of the application may include chat information of a contact. If the application is an audio and video entertainment application, the first information of the application may include related information about a music video.

For example, the electronic device 100 can obtain the first notification message through a notification manager. The notification manager may be a software module included in an application framework layer, and the notification manager can be used to manage content pushed by an application, so that the electronic device 100 displays a notification message pushed by the application.

**S103:** When a card notification function is enabled for an application corresponding to the first notification message, the electronic device 100 displays a first card on the home screen, where the first card is used to present the first notification message.

For example, the electronic device 100 can create and maintain an application list, and the list can store an identifier of an application that is in the electronic device 100 and for which a card notification function is enabled, for example, an application package name or an application name. If the electronic device 100 enables a card notification function of an application, an identifier of the application is added to the application list; or if the electronic device 100 disables a card notification function of an application, an identifier of the application is deleted from the application list.

In a specific implementation, the electronic device 100 can determine whether the card notification function is enabled for the application corresponding to the first notification message by viewing whether an identifier of the application is included in the application list. If the identifier of the application is included in the application list, it indicates that the card notification function is enabled for the application. If the identifier of the application is not included in the application list, it indicates that the card notification function is not enabled for the application.

For example, if the card notification function is not enabled for the application corresponding to the first notification message, the electronic device 100 can display the first notification message in the notification bar.

When the card notification function is enabled for the application corresponding to the first notification message, the electronic device 100 can display the first card on a blank position on the home screen. Alternatively, if the electronic device 100 has already displayed a second card on the home screen, the electronic device 100 can display the first card above the second card in a superimposed manner when displaying the first card. In this way, a plurality of cards on the home screen can be prevented from occupying an excessive area, thereby improving home screen utilization.

A positional relationship between the first card and the second card may include the following cases.
(1) The first card obscures all content of the second card, and only a part of a border of the second card is presented.

In this case, the user can view, on the home screen, a card stack stacked by a plurality of cards. In addition, the user can know, through borders of cards presented in the card stack, a quantity of cards included in the card stack, but can view only content presented on one of the cards. The user needs to switch cards to view content presented on other cards.

(2) The first card obscures some content presented on the second card.

In this case, the user can view, on the home screen, a card stack stacked by a plurality of cards. In addition, the user can view not only all content presented on one of the cards, but also some content presented on the other cards. In this way, the user can switch a card in a targeted manner based on some content presented on the other cards, so that the user can quickly view a notification message that the user wants to browse.

It may be understood that the positional relationship between the first card and the second card may include another case. For example, the first card completely obscures the second card. The positional relationship between the first card and the second card is not limited in this embodiment of this application.

In some implementations, the electronic device 100 can detect a user operation performed on the first card, and open an application page corresponding to the first notification message. The electronic device 100 may display the application page corresponding to the first notification message in a full-screen manner, or may display the application page corresponding to the first notification message in a floating manner. For example, the electronic device 100 can determine, based on an operation type of a user operation, whether to display the application page corresponding to the first notification message in the full-screen manner or display the application page corresponding to the first notification message in the floating manner, so as to meet various personalized requirements of the user for viewing notification messages.

In some implementations, the electronic device 100 can detect a user operation performed on the first card, and delete the first card. In this way, the user can manually clear up a card presented on the home screen.

In some implementations, the electronic device 100 can detect a user operation performed on the first card, and set a reminder time for the first card. The electronic device 100 can pin the first card to the top after the reminder time elapses, so as to achieve an effect of reminding the user to view the card at the reminder time set by the user.

In some implementations, the electronic device 100 can further set groups for cards. One group may correspond to one card stack, and the user can view cards from a same group in one card stack. Further, the electronic device 100 can further detect an operation of dragging a card in one of the groups toward another group by the user, and change a group of the card. In this way, by setting groups for cards and adjusting card groups, it is convenient for the user to organize and manage a plurality of cards.

In some implementations, because the electronic device 100 can obtain notification messages from different applications and different notification messages from a same application, for a plurality of cards stacked together, the electronic device 100 can set different stacking manners for cards corresponding to the notification messages from the same application and cards corresponding to the notification messages from different applications. For example, the notification messages from the same application may be stacked in a horizontal stacking manner, and the notification messages from different applications may be stacked in a vertical stacking manner. In this way, for a plurality of cards in one card stack, the user can know, through a stacking manner, which cards present notification messages from the same application, and which cards present notification messages from different applications.

**FIG. 11** **is a schematic flowchart of another display method according to an embodiment of this application.**

As shown in FIG. 11, the display method may include the following steps.

**S201:** An electronic device 100 enables a card notification function for a first type of notification messages of a first application.

One application can push a plurality of different categories of notification messages. For example, for an instant messaging application, notification messages from different contacts can be pushed. For another example, for an e-commerce application, notification messages from different stores can be pushed. For still another example, for a multimedia application, notification messages from different multimedia publishers can be pushed.

Therefore, the electronic device 100 can manage card notification functions for different categories of notification messages in an application based on categories of notification messages in the application. If a card notification function is enabled for a category of notification messages in an application, a notification message that is obtained by the electronic device 100 and that belongs to the category can be presented in a home screen card, and a notification message that does not belong to the category can be presented in a notification bar.

For example, the electronic device 100 can enable a card notification function for the first type of notification messages of the first application in the following two manners.
(1) The electronic device 100 detects a user operation performed on a category option corresponding to the first type of notification messages displayed in the first application, and enables the card notification function for the first type of notification messages of the first application.

For example, if the first application is an instant messaging application, the category option may be a contact option. If the first application is an e-commerce application, the category option may be a store option. The first application is a multimedia application, and the category option may be a multimedia publisher option.

For example, the user operation may include a user operation that is shown in FIG. 2A(a) and that is performed on more options 601, and a user operation that is shown in FIG. 2A(b) and that is performed on a card notification option 602C.

(2) The electronic device 100 detects a user operation performed on a notification message belonging to the first type of notification messages, and enables a card notification function for the first type of notification messages of the first application.

Because an application can push one or more notification messages belonging to a same category, the electronic device 100 can detect, in a process of displaying a notification message, a user operation performed on the notification message, and enable a card notification function for all notification messages of the category of the notification message.

For example, if the first application is an instant messaging application, in a process in which the electronic device 100 displays a notification message from a first contact pushed by the instant messaging application, the electronic device 100 can detect a user operation performed on the notification message, and enable a card notification function for all notification messages from the first contact; if the first application is an e-commerce application, in a process in which the electronic device 100 displays a notification message from a first store pushed by the e-commerce application, the electronic device 100 can detect a user operation performed on the notification message, and enable a card notification function for all notification messages from the first store; or if the first application is a multimedia application, in a process in which the electronic device 100 displays a notification message from a first multimedia publisher pushed by the video playback application, the electronic device 100 can detect a user operation performed on the notification message, and enable a card notification function for all notification messages from the first multimedia publisher.

For example, the user operation may include a user operation that is shown in FIG. 2B(a) and that is performed on more options 104A, and a user operation that is shown in FIG. 2B(b) and that is performed on a card notification option 105C.

It may be understood that the electronic device 100 can provide a "card notification" interface, and each application can implement a card notification function for a category of notification messages in the application by invoking the interface.

**S202:** The electronic device 100 receives a first notification message.

**S203:** When the first notification message belongs to a notification message category for which a card notification function is enabled, the electronic device 100 displays a first card on the home screen, where the first card is used to present the first notification message.

For example, the electronic device 100 can create and maintain a notification message list, and the list can store identifiers of notification message categories for which card notification functions are enabled in the electronic device 100. When enabling the card notification function for the first type of notification messages of the first application, the electronic device 100 can obtain an identifier of the first type of notification messages, and store the identifier of the first type of notification messages in the notification message list. For example, if the first type of notification messages are notification messages from a contact, the identifier may be a name of the contact. For another example, if the first type of notification messages are notification messages from a store, the identifier may be a name of the store. For still another example, if the first type of notification messages are notification messages from a multimedia publisher, the identifier may be a name of the multimedia publisher.

In specific implementation, the electronic device 100 can determine whether the first notification message belongs to the first type of notification messages by viewing whether an identifier of a notification message category corresponding to the notification message is in the notification message list. If the first notification message belongs to the first type of notification messages, it indicates that the first notification message is a notification message for which a card notification function is enabled. If the first notification message does not belong to the first type of notification messages, it indicates that the first notification message is not a notification message for which a card notification function is enabled.

For example, if the first notification message is not a notification message for which a card notification function is enabled, the electronic device 100 can display the first notification message in the notification bar.

It can be learned from steps S201 to S203 that, if a notification message obtained by the electronic device 100 belongs to a type of notification messages for which the user authorizes a card notification function, the electronic device 100 can present the notification message in a form of a card. This prevents the electronic device 100 from displaying all notification messages in the notification bar, allowing a type of notification messages specified by the user to be displayed on a service card, which is convenient for the user to view a notification message in which the user is interested.

For specific content that is not mentioned in steps S201 to S203, refer to the foregoing steps S101 to S103. Details are not described herein again.

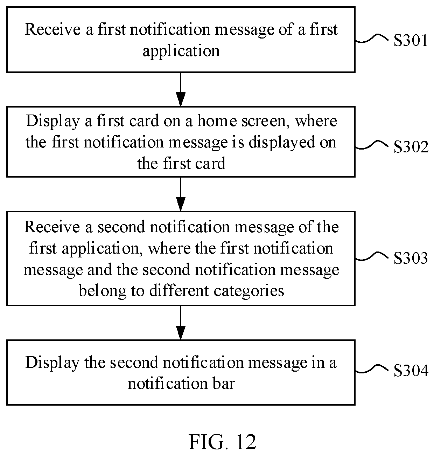

**FIG. 12** **is a schematic flowchart of a display method according to an embodiment of this application.**

**S301**: An electronic device 100 receives a first notification message of a first application.

The first application may be any application installed on the electronic device 100. The first notification message may be a message sent by the first application on the electronic device 100, or may be a message sent by an application server of the first application to the electronic device 100.

For example, if the application is an e-commerce application, the first notification message of the application may include related information about a shopping commodity. If the application is an instant messaging application, the first notification message of the application may include chat information of a contact. If the application is a multimedia application, the first information of the application may include related information about a music video.

The first notification message belongs to a first type of notification messages for which a card notification function is enabled in the first application. Before the electronic device 100 receives the first notification message of the first application, the electronic device 100 can enable a card notification function for the first type of notification messages in any one of the following manners.
(1) The electronic device 100 can display a first page of the first application, where the first page is used to present the first type of notification messages in the first application. The electronic device 100 can detect a first operation performed on the first page, and enable the card notification function for the first type of notification messages.

For example, the first application may be an SMS application, the first page may be a chat page shown in FIG. 2A(a), the first type of notification messages may be a chat message sent by a contact "Lucy", and the first operation may include a user operation that is shown in FIG. 2A(a) and that is performed on more options 601, and a user operation that is shown in FIG. 2A(b) and that is performed on a card notification option 602C.

(2) The electronic device 100 can receive a third notification message of the first application, where the third notification message belongs to the first type of notification messages. The electronic device 100 can display the third notification message. The electronic device 100 detects a second operation performed on the third notification message, and enables the card notification function for the first type of notification messages.

For example, the first application may be an SMS application, the third notification message may be a notification message 1 shown in FIG. 2B(a), and the second operation may include a user operation that is shown in FIG. 2B(a) and that is performed on more options 104A, and a user operation that is shown in FIG. 2B(b) and that is performed on a card notification option 105C.

In other words, in a process of viewing, in an application, a notification message pushed by the application, the user can authorize a card notification function for this type of notification messages of the application, or when the electronic device 100 pushes a notification message of the application, the user can authorize a card notification function for this type of notification messages of the application. In this way, the user can determine, at any time according to a requirement of the user, whether to move a type of notification messages pushed by the application to home screen cards for pushing, thereby meeting a personalized management requirement of the user for notification messages.

It may be understood that the electronic device 100 can provide a "card notification" interface, and each application can enable a card notification function for a specified category of notification messages in the application by invoking the interface.

**S302:** The electronic device 100 displays a first card on a home screen, where the first notification message is displayed on the first card.

In addition, the electronic device 100 does not display the first notification message in a notification bar.

The electronic device 100 can display the first card on a blank part of the home screen. If there is no blank part on the home screen, the electronic device 100 can add a blank page on the home screen to display the first card.

For example, the first card may be the card 701C shown in FIG. 3C.

**S303:** The electronic device 100 receives a second notification message of the first application, where the first notification message and the second notification message belong to different categories.

One application can push a plurality of different categories of notification messages, and one category of notification messages may include one or more notification messages. Therefore, the electronic device 100 can set push manners for different categories of notification messages based on categories of notification messages in an application. For example, some notification messages are pushed in a form of home screen cards, and some notification messages are pushed and displayed in the notification bar.

For example, the first application is an instant messaging application, and the first notification message and the second notification message are notification messages sent by different contacts in the instant messaging application; or the first application is an e-commerce application, and the first notification message and the second notification message are notification messages from different stores in the e-commerce application; or the first application is a multimedia application, and the first notification message and the second notification message are notification messages from different multimedia publishers.

**S304:** The electronic device 100 displays the second notification message in the notification bar.

In addition, the electronic device 100 does not display the second notification message on the home screen.

The notification bar can be displayed when the electronic device 100 detects a swipe-down operation from a top of a display screen.

It can be learned from steps S301 to S304 that the electronic device 100 can push different categories of notification messages of a same application in different manners. When notification messages of the same application are pushed, some notification messages are presented on the home screen in a form of home screen cards, and some notification messages can be displayed in the notification bar. This prevents all messages pushed by the application from being displayed in the notification bar, which avoids being not conducive to browsing and managing notification messages by the user, thereby improving efficiency of browsing notification messages by the user, making it convenient for the user to quickly view, through a card, a notification message that the user wants to view, and making it convenient for the user to view a notification message that the user is interested in.

In some implementations, after displaying the first card, the electronic device 100 can further receive a fourth notification message, and display a second card in a superimposed manner based on the first card, where the fourth notification message is displayed on the second card.

For example, the first card may be the card 701A shown in FIG. 3A, and the second card may be the card 701C shown in FIG. 3C.

In other words, the electronic device 100 can display a plurality of cards in a superimposed manner on the home screen. This can prevent the plurality of cards on the home screen from occupying an excessive area, thereby improving home screen utilization.

Further, when the fourth notification message and the first notification message are messages pushed by a same application, the second card may be located in a first direction of the first card; and when the fourth notification message and the first notification message are messages pushed by different applications, the second card may be located in a second direction of the first card; and the first direction is a horizontal direction or a vertical direction, and the first direction is perpendicular to the second direction.

In other words, the electronic device 100 can use different stacking manners to distinguish between cards corresponding to notification messages of different applications and cards corresponding to notification messages of a same application, so that the user can quickly distinguish, from a plurality of cards, between notification messages of different applications and between different notification messages in an application, thereby making it convenient for the user to manage and browse notification messages in the cards.

For example, as shown in FIG. 9A, cards corresponding to different notification messages of a same application can be stacked in a horizontal arrangement manner, and cards corresponding to notification messages of different applications can be stacked in a vertical arrangement manner.

In some implementations, the electronic device 100 can detect a third operation performed on the second card, and adjust a superimposition order of the first card and the second card.

When the second card is located in the first direction of the first card, the third operation may include a swipe operation in the first direction, and the first direction is the horizontal direction or the vertical direction.

For example, the second card may be the card 701C shown in FIG. 5A, and the third operation may be the swipe operation shown in FIG. 5A. Alternatively, the second card may be the card 701D shown in FIG. 5B, and the third operation may be the swipe operation shown in FIG. 5B.

In other words, the electronic device 100 can adjust an order of cards in a card stack based on a user operation, so that the user can view, in a manner of adjusting the order of cards, notification messages presented on the cards in the card stack.

In some implementations, the first card can be displayed in a first card stack in a superimposed manner, and the first card stack corresponds to a first card group. The electronic device 100 can further receive a fifth notification message, and display a third card in a superimposed manner on a second card stack displayed on the home screen. The fifth notification message is displayed on the third card, and the second card stack corresponds to a second card group.

For example, the first card stack may be the card stack 701 shown in FIG. 8A, and the second card stack may be the card stack 704 shown in FIG. 8A.

In other words, the electronic device 100 can set different card groups for different notification messages, so that when displaying cards corresponding to notification messages, the electronic device 100 can categorize and display different cards based on card groups, making it convenient for the user to manage and browse different notification messages.

In some implementations, the first card is displayed in the first card stack, and a plurality of cards are displayed in a superimposed manner in the first card stack. The electronic device 100 can detect a fourth operation performed on the first card, and set a first reminder time for the first card. Then, the electronic device 100 can pin the first card to the top in the first card stack when the first reminder time elapses.

For example, the first card may be the card 701C shown in FIG. 7A and FIG. 7C, the first card stack may be the card stack 701 shown in FIG. 7A and FIG. 7C, and the fourth operation may include a user operation that is shown in FIG. 7A and that is performed on the card 701C and a user operation that is shown in FIG. 7B and that is performed on the OK option 703C.

In other words, the electronic device 100 can set a to-do item for a card in a card stack based on a user operation, so that the card can be pinned to the top after a reminder time set by the user elapses, so that the user can promptly view the card that needs to be processed, thereby enhancing the user's management for cards.

In some implementations, the electronic device 100 can detect a fifth operation performed on the first card, and display a first window in a floating manner, where an application page corresponding to the first notification message is displayed in the first window.

It may be understood that, because a display region of the first window is limited, the first window can be used to display partial content of the application page corresponding to the first notification message.

For example, the first card may be the card 701C shown in FIG. 4A, the fifth operation may be a tap operation performed on the card 701C shown in FIG. 4A, and the first window may be the window A shown in FIG. 4B.

In other words, in addition to viewing a notification message through a home screen card, the user can also open an application page corresponding to the notification message through the card, so that the user can view details of the notification message and process the notification message.

In some implementations, the electronic device 100 can store an identifier of a notification message category for which a card notification function is enabled in one or more applications. After determining that the stored identifier includes an identifier of a notification message category to which the first notification message belongs, the electronic device 100 displays the first card on the home screen.

Correspondingly, after enabling a card notification function of a specific notification message category, the electronic device 100 can store an identifier of the notification message category, so that when receiving a notification message of the same notification message category again, the electronic device 100 can display the notification message on a home screen card.

For example, if the first notification message is a notification message from a contact, the identifier may be a name of the contact; if the first notification message is a notification message from a store, the identifier may be a name of the store; or if the first notification message is a notification message from a multimedia publisher, the identifier may be a name of the video publisher.

In some implementations, the electronic device 100 can display the first card stack and the second card stack on the home screen, the first card stack and the second card stack may include one or more cards, and the first card is located in the first card stack. The electronic device 100 can detect an operation of dragging the first card toward the second card stack, and move the first card to the second card stack.

For example, with reference to FIG. 8A and FIG. 8B, the operation may be the drag operation shown in FIG. 8A, the first card stack may be the card stack 701 shown in FIG. 8A, the first card may be the card 701C shown in FIG. 8A, and the second card stack may be the card stack 704 shown in FIG. 8A.

In other words, the electronic device 100 can adjust cards in different card stacks based on a user operation to improve a degree of operational freedom of the user. In addition, if different card stacks correspond to different card groups, the user can further adjust, on home screen cards, card groups corresponding to different notification messages, to facilitate an operation of the user.

In some implementations, the electronic device 100 can enable a card notification function of a second application through a settings application. The electronic device 100 can receive a sixth notification message of the second application, where the sixth notification message is any notification message pushed by the second application. The electronic device 100 can display a fourth card on the home screen when the card notification function of the second application is enabled, where the sixth notification message is displayed on the fourth card.

In addition, the electronic device 100 does not display the sixth notification message in the notification bar.

For example, the second application may be an SMS application, and the electronic device 100 can enable a card notification function of the second application through the user interfaces shown in FIG. 1A to FIG. 1D.

In other words, the electronic device 100 can set a card notification function of an application through the settings application, and the user can select, based on a willingness of the user, whether to enable a card notification function of an application. If the electronic device 100 obtains a notification message pushed by an application for which a card notification function is enabled, the notification message is presented on a home screen card. If the electronic device 100 obtains a notification message pushed by an application for which a card notification function is not enabled, the notification message is not presented on a home screen card, for example, the notification message is presented in the notification bar.

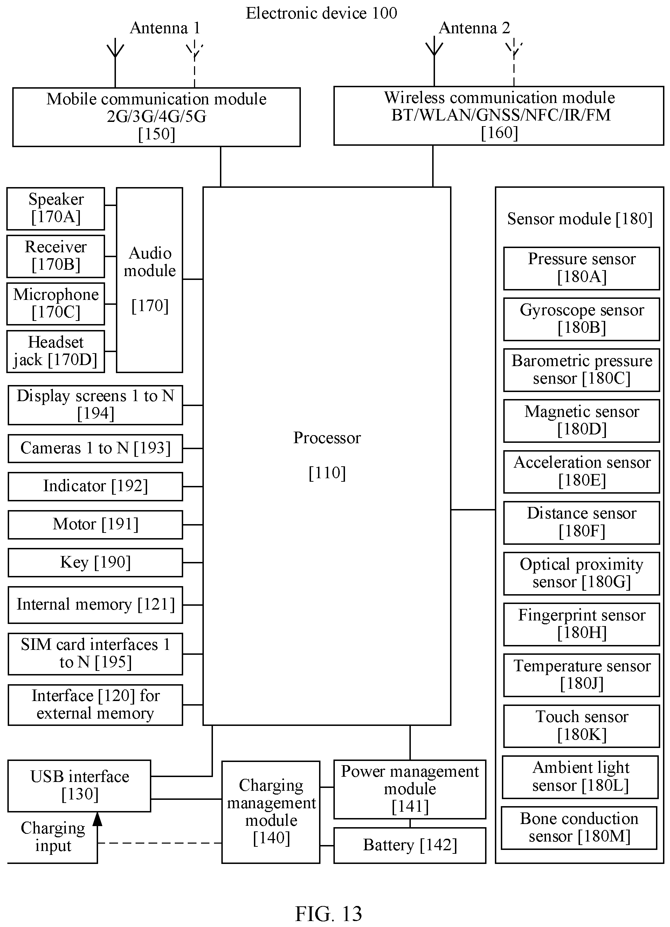

**FIG. 13** **shows a diagram of a hardware structure of an electronic device 100.**

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structures illustrated in embodiments of the present invention do not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

**The processor 110** may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

**In some implementations, the processor 110 can obtain a notification message from an application, and determine whether the notification message belongs to a notification message category for which a card notification function is enabled.**

The controller can generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory can store instructions or data just used or cyclically used by the processor 110. If the processor 110 needs to use the instructions or the data again, the processor may directly call the instructions or the data from the memory. This avoids repeated access, reduces waiting time of the processor 110, and thus improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

**The display screen 194** is configured to display an image, a video, and the like. The display screen 194 includes a display panel. In some embodiments, the electronic device may include one or N display screens 194, where N is a positive integer greater than 1.

**In some implementations, the display screen 194 may be configured to: display, when a notification message belongs to a message category for which a card notification function is enabled, a card on the home screen, where the card can be used to present the notification message; or display, when a notification message does not belong to a message category for which a card notification function is enabled, the notification message in the notification bar.**

**For a specific process of displaying a notification message on the display screen 194, refer to** **FIG. 1A to FIG. 1E****, FIG. 2A(a) to FIG. 2B(b),** **FIG. 3A to FIG. 3C****,** **FIG. 4A to FIG. 4C****,** **FIG. 5A to FIG. 5C****,** **FIG. 6A** **and** **FIG. 6B****,** **FIG. 7A to FIG. 7C****,** **FIG. 8A** **and** **FIG. 8B****, and** **FIG. 9A to FIG. 9C****.**

The electronic device 100 may implement a shooting function through the ISP, the camera 193, the video codec, the GPU, the display screen 194, the application processor, and the like.

The camera 193 is configured to capture a static image or a video. In some embodiments, the electronic device 100 may include one or N cameras 193, where N is a positive integer greater than 1.

The internal memory 121 may include one or more random access memories (random access memories, RAMs) and one or more non-volatile memories (non-volatile memories, NVMs).

The random access memory may be directly read and written by the processor 110, may be configured to store executable programs (such as machine instructions) of an operating system or another running program, and may further be configured to store data of users and application programs.

The non-volatile memory may also store the executable programs, the data of the users and the applications, and the like, and may be loaded into the random access memory in advance, to be directly read and written by the processor 110.

The electronic device 100 may implement an audio function, for example, music playing and recording, through the audio module 170, the speaker 170A, the receiver 170B, the microphone 170C, the headset jack 170D, the application processor, and the like.

The touch sensor 180K is also referred to as a "touch component". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display screen 194. In some other embodiments, the touch sensor 180K may alternatively be disposed on a surface of the electronic device 100 at a position different from that of the display screen 194.

The electronic device may be a portable terminal device running HarmonyOS, iOS, Android, Microsoft, or another operating system, for example, a mobile phone, a tablet computer, or a wearable device; or may be a non-portable terminal device, for example, a laptop (Laptop) computer having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In embodiments of the present invention, an Android system of a layered architecture is used as an example to illustrate the software structure of the electronic device 100.

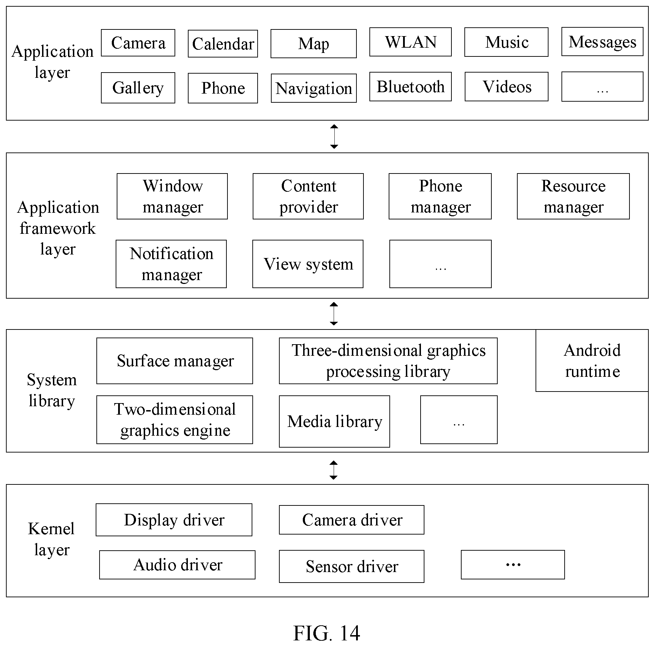

**FIG. 14** **is a block diagram of a software structure of an electronic device 100 according to an embodiment of this application.**

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 14, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application program at the application layer. The application framework layer includes some predefined functions.

As shown in FIG. 14, the application framework layer may include a window manager, a content provider, a view system, a phone manager, a resource manager, a notification manager, and the like.

The window manager is configured to manage a window program. The window manager may obtain a size of the display screen, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, a phone book, and the like.

The view system includes visual controls such as a control for displaying a text and a control for displaying an image. The view system may be configured to construct an application program. A display interface may include one or more views. For example, a display interface including an SMS notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application program.

The notification manager enables an application program to display a notification message in a status bar, and may be configured to convey an informational notification message. The notification manager can automatically disappear after a short stay without requiring a user interaction. For example, the notification manager is configured to inform about download completion, remind of a notification message, and the like. The notification manager may alternatively be a notification that appears in a top status bar of the system in a form of a graph or a scroll bar text, for example, a notification of an application program that is run on a background, or may be a notification that appears on the screen in a form of a dialog window. For example, text information is displayed in the status bar, a prompt tone is emitted, the electronic device vibrates, or an indicator light flashes.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photograph-capture scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch single-tap operation, and a control corresponding to the single-tap operation is a control of a camera application icon is used. The camera application calls an interface of the application framework layer to enable the camera application, then enables the camera driver by calling the kernel layer, and captures a static image or a video through the camera 193.

It should be understood that the steps in the foregoing method embodiments may be completed through an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to call the computer program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented in hardware, or may be implemented in software. When the processor is implemented in hardware, the processor may be a logic circuit, an integrated circuit, or the like. When the processor is implemented in software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated onto a same chip, or may be separately disposed on different chips. A type of the memory and a manner of configuring the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or instructions). When the computer program is run, a computer is enabled to perform any one of the methods performed by the electronic device 100 in any one of the foregoing embodiments.

This application further provides a computer-readable storage medium. The computer-readable storage medium stores a computer program (which may also be referred to as code or instructions). When the computer program is run, a computer is enabled to perform any one of the methods performed by the electronic device 100 in any one of the foregoing embodiments.

It should be noted that the processor in embodiments of this application may be an integrated circuit chip, and has a signal processing capability. In an implementation process, steps in the foregoing method embodiments can be implemented through a hardware integrated logical circuit in the processor, or through instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor can implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effects that can be achieved by the apparatus, the computer-readable storage medium, the computer program product, or the chip, refer to the beneficial effects in the corresponding method provided above. Details are not described herein again.

Implementations of this application may be randomly combined to achieve different technical effects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions can be transmitted from one website, computer, server, or data center to another website, computer, server, or data center through wired (such as coaxial cable, optical fiber, or digital subscriber line) or wireless (such as infrared, radio, or microwaves) means. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made based on the disclosure of the present invention shall be included in the protection scope of the present invention.

## Claims

1. A display method, comprising:
receiving, by an electronic device, a first notification message of a first application;
displaying, by the electronic device, a first card on a home screen, wherein the first notification message is displayed on the first card;
receiving, by the electronic device, a second notification message of the first application, wherein the first notification message and the second notification message belong to different categories; and
displaying, by the electronic device, the second notification message in a notification bar.

2. The method according to claim 1, wherein
the first application is an instant messaging application, and the first notification message and the second notification message are notification messages sent by different contacts in the instant messaging application; or
the first application is an e-commerce application, and the first notification message and the second notification message are notification messages from different stores in the e-commerce application; or
the first application is a multimedia application, and the first notification message and the second notification message are notification messages from different multimedia publishers.

3. The method according to claim 1 or 2, wherein the first notification message belongs to a first type of notification messages for which a card notification function is enabled in the first application, and before receiving, by the electronic device, the first notification message of the first application, the method further comprises:
displaying, by the electronic device, a first page of the first application, wherein the first page is used to present the first type of notification messages in the first application; and
detecting, by the electronic device, a first operation performed on the first page, and enabling the card notification function for the first type of notification messages.

4. The method according to claim 1 or 2, wherein the first notification message belongs to a first type of notification messages for which a card notification function is enabled in the first application, and before receiving, by the electronic device, the first notification message of the first application, the method further comprises:
receiving, by the electronic device, a third notification message of the first application, wherein the third notification message belongs to the first type of notification messages;
displaying, by the electronic device, the third notification message; and
detecting, by the electronic device, a second operation performed on the third notification message, and enabling the card notification function for the first type of notification messages.

5. The method according to any one of claims 1 to 4, wherein the method further comprises:
receiving, by the electronic device, a fourth notification message; and
displaying, by the electronic device, a second card in a superimposed manner based on the first card, wherein the fourth notification message is displayed on the second card.

6. The method according to claim 5, wherein
when the fourth notification message and the first notification message are messages pushed by a same application, the second card is located in a first direction of the first card; and
when the fourth notification message and the first notification message are messages pushed by different applications, the second card is located in a second direction of the first card; and the first direction is a horizontal direction or a vertical direction, and the first direction is perpendicular to the second direction.

7. The method according to claim 5 or 6, wherein the method further comprises:
detecting, by the electronic device, a third operation performed on the second card; and
adjusting, by the electronic device, a superimposition order of the first card and the second card.

8. The method according to claim 7, wherein
when the second card is located in the first direction of the first card, the third operation comprises a swipe operation in the first direction, and the first direction is the horizontal direction or the vertical direction.

9. The method according to any one of claims 1 to 8, wherein the first card is displayed in a first card stack in a superimposed manner, and the first card stack corresponds to a first card group; and the method further comprises:
receiving, by the electronic device, a fifth notification message; and
displaying, by the electronic device, a third card in a superimposed manner on a second card stack displayed on the home screen, wherein the fifth notification message is displayed on the third card, and the second card stack corresponds to a second card group.

10. The method according to any one of claims 1 to 9, wherein the first card is displayed in the first card stack, and a plurality of cards are displayed in a superimposed manner in the first card stack; and the method further comprises:
detecting, by the electronic device, a fourth operation performed on the first card, and setting a first reminder time for the first card; and
pinning, by the electronic device, the first card to the top in the first card stack when the first reminder time elapses.

11. The method according to any one of claims 1 to 10, wherein the method further comprises:
detecting, by the electronic device, a fifth operation performed on the first card, and displaying, by the electronic device, a first window in a floating manner, wherein an application page corresponding to the first notification message is displayed in the first window.

12. The method according to any one of claims 1 to 11, wherein the electronic device stores an identifier of a notification message category for which a card notification function is enabled in one or more applications, and before displaying, by the electronic device, the first card on the home screen, the method further comprises:
determining, by the electronic device, that the stored identifier comprises an identifier of a notification message category to which the first notification message belongs.

13. The method according to any one of claims 1 to 12, wherein the electronic device displays the first card stack and the second card stack on the home screen, the first card stack and the second card stack comprise one or more cards, and the first card is located in the first card stack; and the method further comprises:
detecting, by the electronic device, an operation of dragging the first card toward the second card stack, and moving the first card to the second card stack.

14. The method according to any one of claims 1 to 13, wherein the method further comprises:
enabling, by the electronic device, a card notification function of a second application through a settings application;
receiving, by the electronic device, a sixth notification message of the second application, wherein the sixth notification message is any notification message pushed by the second application; and
displaying, by the electronic device, a fourth card on the home screen when the card notification function of the second application is enabled, wherein the sixth notification message is displayed on the fourth card.

15. The method according to any one of claims 1 to 14, wherein the electronic device displays the notification bar when detecting a swipe-down operation from a top of a display screen.

16. An electronic device, comprising a memory, one or more processors, and one or more programs, wherein when the one or more processors execute the one or more programs, the electronic device is enabled to implement the method according to any one of claims 1 to 15.

17. A computer-readable storage medium comprising instructions, wherein when the instructions are run on an electronic device, the electronic device is enabled to perform the method according to any one of claims 1 to 15.
